# EUROPEAN PATENT APPLICATION

(11) **EP 3 720 203 A1**
(43) Date of publication of application: **07.10.2020**
(21) Application number: 18894373.2
(22) Date of filing: 07.12.2018
(51) Int. Cl.: H04W 64/00

(54) **SESSION ESTABLISHMENT METHOD, DEVICE AND SYSTEM**

(30) Priority: 29.12.2017 CN 201711484925
(71) Applicant: HUAWEI TECHNOLOGIES CO., LTD., Shenzhen, Guangdong 518129 (CN)
(72) Inventor: YU, Youyang, Shenzhen, Guangdong 518129 (CN); JIANG, Ming, Shenzhen, Guangdong 518129 (CN)
(74) Representative: Pfenning, Meinig & Partner mbB
(86) International application number: PCT/CN2018/119680
(87) International publication number: WO 2019/128672

(57) **Abstract**

Embodiments of this application provide a session establishment method and system, and a device, to resolve a prior-art problem that NAS message transfer cannot be separated from session user plane establishment and application in some scenarios is limited. The method includes: in a process in which a terminal establishes a connection to a second access network device, obtaining, by the terminal, an identifier of the second access network device; and sending, by the terminal, a first non-access stratum NAS message to a first access network device, where the first NAS message carries the identifier of the second access network device, and the identifier of the second access network device is used by the terminal to establish a session by using the second access network device.

## Description

This application claims priority to Chinese Patent Application No. 201711484925.8, filed with the China National Intellectual Property Administration on December 29, 2017 and entitled "SESSION ESTABLISHMENT METHOD AND SYSTEM, AND DEVICE", which is incorporated herein by reference in its entirety.

### TECHNICAL FIELD

This application relates to the field of communications technologies, and in particular, to a session establishment method and system, and a device.

### BACKGROUND

To address challenges from wireless broadband technologies and keep 3rd generation partnership project (3rd generation partnership project, 3GPP) networks at the leading edge, the 3GPP standardization group formulated a network architecture of a next generation mobile communications system (next generation system) at the end of 2016, which is referred to as a 5th generation (5rd generation, 5G) network architecture. This architecture allows a terminal to access a 5G core network (5G core network, 5GC) using not only a 3GPP access technology, but also a non-3GPP (non-3GPP) access technology.

Currently, a process in which the terminal accesses the 5GC may include a registration procedure and a session establishment procedure. In the registration procedure, the terminal first establishes a connection to an access network side, and then sends a registration request message to an access and mobility management function (access and mobility management function, AMF) network element. The AMF network element interacts with an authentication server function (authentication server function, AUSF) network element to complete access authentication of the terminal. After the terminal is successfully registered, the terminal initiates the session establishment procedure. To be specific, the terminal sends a protocol data unit (protocol data unit, PDU) session establishment request to a session management function (session management function, SMF) network element, and the SMF network element instructs a user plane function (user plane function, UPF) network element to establish a user plane of a session.

According to a definition in an existing solution, an access network device that forwards the PDU session establishment request is an access network device that subsequently establishes the user plane of the session with the UPF network element. In other words, in the prior art, one access device may have two functions: forwarding a non-access stratum (non-access stratum, NAS) message, for example, the PDU session establishment request; and establishing a user plane of a session. Consequently, NAS message transfer cannot be separated from user plane establishment, and application in some scenarios is limited. For example, when a non-3GPP access network is a fixed network, although there is a complete user plane processing solution for an access network side of the fixed network and a user plane of a session can be established, the access network side of the fixed network may not support NAS message transfer due to a limitation of conventional fixed network deployment. Consequently, a terminal cannot access a 5GC.

Therefore, how to separate a NAS message transfer function from a session user plane establishment function so as to provide more diversified services for a terminal is now an urgent technical problem that needs to be resolved.

### SUMMARY

Embodiments of this application provide a session establishment method and system, and a device, to resolve a prior-art problem that NAS message transfer cannot be separated from session user plane establishment and application in some scenarios is limited.

To achieve the foregoing objective, the embodiments of this application provide the following technical solutions.

According to a first aspect, a session establishment method is provided, where the method includes: in a process in which a terminal establishes a connection to a second access network device, obtaining, by the terminal, an identifier of the second access network device; and sending, by the terminal, a first non-access stratum NAS message to a first access network device, where the first NAS message carries the identifier of the second access network device, and the identifier of the second access network device is used by the terminal to establish a session by using the second access network device. According to the session establishment method provided in this embodiment of this application, in this embodiment of this application, the first access network device may forward a NAS message, and the second access network device may establish a user plane of a session. Based on a possible difference between functions of the access network devices, a NAS message transfer function can be separated from a session user plane establishment function. Therefore, more diversified services can be provided for the terminal.

In a possible design, after the sending, by the terminal, a first NAS message to a first access network device, the method further includes: receiving, by the terminal, a second NAS message from the first access network device, where the second NAS message carries a resource identifier corresponding to the session, and the resource identifier is used by the second access network device to identify the session. Optionally, the second NAS message may further carry a terminal identifier, and the terminal identifier is used by the second access network device to identify the terminal.

In this scenario, there are the following several possible implementations. Case 1: The first NAS message carries the identifier of the second access network device, and the second NAS message carries the terminal identifier. Optionally, the second NAS message may further carry the resource identifier. Case 2: The first NAS message carries the identifier of the second access network device and the terminal identifier. Optionally, the second NAS message carries the resource identifier. Case 3: The first NAS message carries the identifier of the second access network device and the resource identifier, and the second NAS message carries the terminal identifier. Case 4: The first NAS message carries the identifier of the second access network device, the resource identifier, and the terminal identifier. For the second NAS message, refer to an existing second NAS message. This is not specifically limited in this embodiment of this application.

In a possible design, after the sending, by the terminal, a first NAS message to a first access network device, the method further includes: receiving, by the terminal, a second NAS message from the first access network device; and initiating, by the terminal, a session establishment procedure between the terminal and the second access network device based on the identifier of the second access network device.

In this scenario, there are the following several possible implementations. Case 1: The first NAS message carries the identifier of the second access network device, and the second NAS message carries the terminal identifier. Case 2: The first NAS message carries the identifier of the second access network device and the terminal identifier. For the second NAS message, refer to an existing second NAS message. This is not specifically limited in this embodiment of this application.

In a possible design, after the sending, by the terminal, a first NAS message to a first access network device, the method further includes: receiving, by the terminal, a resource identifier corresponding to the session from the second access network device, where the resource identifier is used by the second access network device to identify the session; and receiving, by the terminal, a second NAS message from the first access network device.

In this scenario, there are the following several possible implementations. Case 1: The first NAS message carries the identifier of the second access network device. For the second NAS message, refer to an existing second NAS message. In addition, the terminal further receives the terminal identifier from the second access network device. Case 2: The first NAS message carries the identifier of the second access network device and the terminal identifier. For the second NAS message, refer to an existing second NAS message.

According to a second aspect, a session establishment method is provided, where the method includes: receiving, by a session management network element, a first non-access stratum NAS message from a first access network device, where the first NAS message carries an identifier of a second access network device; and sending, by the session management network element, a first message to a mobility management network element, where the first message is used to indicate a session to be established by using the second access network device corresponding to the identifier of the second access network device. For a technical effect of the second aspect, refer to the technical effect of the first aspect. Details are not described herein.

In a possible design, after the sending, by the session management network element, a first message to a mobility management network element, the method further includes: sending, by the session management network element, a second NAS message to the first access network device, where the second NAS message carries at least one of a resource identifier corresponding to the session or a terminal identifier, the terminal identifier is used by the second access device to identify a terminal, and the resource identifier is used by the second access device to identify the session.

In a possible design, the method further includes: selecting, by the session management network element, the second access network device for the session based on the identifier of the second access network device.

According to a third aspect, a session establishment method is provided, where the method includes: receiving, by a mobility management network element, a first non-access stratum NAS message from a first access network device, where the first NAS message carries an identifier of a second access network device; sending, by the mobility management network element, a second message to the second access network device corresponding to the identifier of the second access network device; and receiving, by the second access network device, the second message from the mobility management network element, and establishing a session based on the second message. For a technical effect of the second aspect, refer to the technical effect of the first aspect. Details are not described herein.

According to a fourth aspect, a session establishment method is provided, where the method includes: sending, by a terminal, a first non-access stratum NAS message to a first access network device, where the first NAS message is used to request to establish a session; and receiving, by the terminal, an identifier of a second access network device, where the identifier of the second access network device is used to indicate that the terminal has established the session by using the second access network device; or receiving, by the terminal, an identifier of the second access network device, and initiating a session establishment procedure between the terminal and the second access network device based on the identifier of the second access network device. For a technical effect of the fourth aspect, refer to the technical effect of the first aspect. Details are not described herein.

In a possible design, the receiving, by the terminal, an identifier of a second access network device includes: receiving, by the terminal, the identifier of the second access network device from the second access network device; and the method further includes: receiving, by the terminal, a second NAS message from the first access network device.

In this scenario, there are the following several possible implementations. Case 1: The first NAS message carries a terminal identifier, and the terminal identifier is used by the second access network device to identify the terminal. For the second NAS message, refer to an existing second NAS message. Optionally, the terminal further receives, from the second access network device, a resource identifier corresponding to the session, and the resource identifier is used by the second access network device to identify the session. Case 2: The first NAS message carries the resource identifier. For the second NAS message, refer to an existing second NAS message. In addition, the terminal further receives the terminal identifier from the second access network device. Case 3: The first NAS message carries the terminal identifier and the resource identifier. For the second NAS message, refer to an existing second NAS message.

In a possible design, the receiving, by the terminal, an identifier of a second access network device includes: receiving, by the terminal, a second NAS message from the first access network device, where the second NAS message carries the identifier of the second access network device.

In this scenario, there are the following several possible implementations. Case 1: The first NAS message carries the terminal identifier, and the second NAS message carries the identifier of the second access network device. Optionally, the second NAS message further carries the resource identifier. Case 2: The first NAS message carries the resource identifier, and the second NAS message carries the identifier of the second access network device and the terminal identifier. Case 3: The first NAS message carries the terminal identifier and the resource identifier, and the second NAS message carries the identifier of the second access network device. Case 4: For the first NAS message, refer to an existing first NAS message. The second NAS message carries the identifier of the second access network device and the terminal identifier. Optionally, the second NAS message carries the resource identifier.

According to a fifth aspect, a session establishment method is provided, where the method includes: receiving, by a session management network element, a first non-access stratum NAS message from a first access network device, where the first NAS message is used to request to establish a session; and sending, by the session management network element, a first message to a mobility management network element, where the first message is used to indicate the session to be established by using a second access network device. For a technical effect of the second aspect, refer to the technical effect of the first aspect. Details are not described herein.

In a possible design, after the sending, by the session management network element, a first message to a mobility management network element, the method further includes: sending, by the session management network element, a second NAS message to the first access network device, where the second NAS message carries an identifier of the second access network device. Optionally, the second NAS message further carries at least one of a resource identifier corresponding to the session or a terminal identifier. The terminal identifier is used by the second access device to identify a terminal. The resource identifier is used by the second access device to identify the session.

In a possible design, before the sending, by the session management network element, a request message to a mobility management network element, the method further includes: selecting, by the session management network element, the second access network device for the session based on location information of the terminal, where the request message further carries the identifier of the second access network device correspondingly.

With reference to the second aspect or the fifth aspect, in a possible design, the method further includes: obtaining, by the session management network element, at least one of the location information of the terminal, subscription data of the terminal, first indication information, or a local policy, where the first indication information is used by the terminal to request selection of another access network device for the session; and allowing, by the session management network element based on the at least one of the location information of the terminal, the subscription data of the terminal, the first indication information, or the local policy, the selection of the another access network device for the session.

According to a sixth aspect, a session establishment method is provided, where the method includes: receiving, by a mobility management network element, a first non-access stratum NAS message from a first access network device, where the first NAS message is used to request to establish a session; sending, by the mobility management network element, a second message to a second access network device; and receiving, by the second access network device, the second message from the mobility management network element, and establishing the session based on the second message. For a technical effect of the second aspect, refer to the technical effect of the first aspect. Details are not described herein.

With reference to any one of the foregoing aspects, in a possible design, the second NAS message further carries second indication information, and the second indication information is used to indicate the session to be established by using the second access network device.

With reference to any one of the foregoing aspects, in a possible design, the first NAS message further carries the first indication information, and the first indication information is used by the terminal to request selection of the another access network device for the session.

According to a seventh aspect, a terminal is provided, where the terminal has a function of implementing the method according to the first aspect or the fourth aspect. The function may be implemented by hardware, or may be implemented by hardware executing corresponding software. The hardware or the software includes one or more modules corresponding to the function.

According to an eighth aspect, a terminal is provided, including a processor and a memory, where the memory is configured to store a computer-executable instruction, and when the terminal runs, the processor executes the computer-executable instruction stored in the memory, to enable the terminal to perform the session establishment method according to the first aspect or the fourth aspect.

According to a ninth aspect, a computer-readable storage medium is provided, where the computer-readable storage medium stores an instruction, and when the instruction is run on a computer, the computer is enabled to perform the session establishment method according to the first aspect or the fourth aspect.

According to a tenth aspect, a computer program product including an instruction is provided, and when the computer program product runs on a computer, the computer is enabled to perform the session establishment method according to the first aspect or the fourth aspect.

For a technical effect brought by any design of the seventh aspect to the tenth aspect, refer to technical effects brought by the different designs of the first aspect or the fourth aspect. Details are not described herein.

According to an eleventh aspect, a session management network element is provided, where the session management network element has a function of implementing the method according to the second aspect or the fifth aspect. The function may be implemented by hardware, or may be implemented by hardware executing corresponding software. The hardware or the software includes one or more modules corresponding to the function.

According to a twelfth aspect, a session management network element is provided, including a processor and a memory, where the memory is configured to store a computer-executable instruction, and when the session management network element runs, the processor executes the computer-executable instruction stored in the memory, to enable the session management network element to perform the session establishment method according to the second aspect or the fifth aspect.

According to a thirteenth aspect, a computer-readable storage medium is provided, where the computer-readable storage medium stores an instruction, and when the instruction is run on a computer, the computer is enabled to perform the session establishment method according to the second aspect or the fifth aspect.

According to a fourteenth aspect, a computer program product including an instruction is provided, and when the computer program product runs on a computer, the computer is enabled to perform the session establishment method according to the second aspect or the fifth aspect.

For a technical effect brought by any design of the eleventh aspect to the fourteenth aspect, refer to technical effects brought by the different designs of the second aspect or the fifth aspect. Details are not described herein.

According to a fifteenth aspect, a session establishment system is provided, where the session establishment system includes a mobility management network element and a second access network device, where the mobility management network element is configured to receive a first non-access stratum NAS message from a first access network device, where the first NAS message carries an identifier of the second access network device; the mobility management network element is further configured to send a second message to the second access network device corresponding to the identifier of the second access network device; and the second access network device is configured to: receive the second message from the mobility management network element, and establish a session based on the second message. For a technical effect of the fifteenth aspect, refer to the technical effect of the first aspect. Details are not described herein.

In a possible design, the mobility management network element is further configured to select the second access network device for the session based on the identifier of the second access network device.

In a possible design, the mobility management network element is further configured to obtain at least one of location information of a terminal, subscription data of the terminal, first indication information, or a local policy, where the first indication information is used by the terminal to request selection of another access network device for the session; and the mobility management network element is further configured to allow, based on the at least one of the location information of the terminal, the subscription data of the terminal, the first indication information, or the local policy, the selection of the another access network device for the session.

In a possible design, the mobility management network element is further configured to receive third indication information from a session management network element, where the third indication information is used to indicate that the selection of the another access network device for the session is allowed.

In a possible design, the mobility management network element is further configured to receive a second NAS message from the session management network element, where the second NAS message carries at least one of a resource identifier corresponding to the session or a terminal identifier, the terminal identifier is used by the second access device to identify the terminal, and the resource identifier is used by the second access device to identify the session; and the mobility management network element is further configured to send the second NAS message to the first access network device.

In a possible design, the second access network device is further configured to allocate the terminal identifier to the terminal; or the second access network device is further configured to receive the terminal identifier from the session management network element.

In a possible design, the second access network device is further configured to allocate the resource identifier to the terminal; or the second access network device is further configured to receive the resource identifier from the session management network element.

According to a sixteenth aspect, a session establishment system is provided, where the session establishment system includes a mobility management network element and a second access network device, where the mobility management network element is configured to receive a first non-access stratum NAS message from a first access network device, where the first NAS message is used to request to establish a session; the mobility management network element is further configured to send a second message to the second access network device; and the second access network device is further configured to: receive the second message from the mobility management network element, and establish the session based on the second message. For a technical effect of the sixteenth aspect, refer to the technical effect of the first aspect. Details are not described herein.

In a possible design, the mobility management network element is further configured to select the second access network device for the session based on location information of a terminal.

In a possible design, the mobility management network element is further configured to receive a second NAS message from a session management network element, where the second NAS message carries an identifier of the second access network device; and the mobility management network element is further configured to send the second NAS message to the first access network device. Optionally, the second NAS message further carries at least one of a resource identifier corresponding to the session or a terminal identifier, where the terminal identifier is used by the second access device to identify the terminal, and the resource identifier is used by the second access device to identify the session.

With reference to the fifteenth aspect or the sixteenth aspect, in a possible design, the mobility management network element is further configured to obtain the at least one of the location information of the terminal, the subscription data of the terminal, the first indication information, or the local policy, where the first indication information is used by the terminal to request selection of the another access network device for the session; and the mobility management network element is further configured to allow, based on the at least one of the location information of the terminal, the subscription data of the terminal, the first indication information, or the local policy, the selection of the another access network device for the session.

With reference to the fifteenth aspect or the sixteenth aspect, in a possible design, the mobility management network element is further configured to receive the third indication information from the session management network element, where the third indication information is used to indicate that the selection of the another access network device for the session is allowed.

With reference to the fifteenth aspect or the sixteenth aspect, in a possible design, the second access network device is further configured to allocate the terminal identifier to the terminal; or the second access network device is further configured to receive the terminal identifier from the session management network element.

With reference to the fifteenth aspect or the sixteenth aspect, in a possible design, the second access network device is further configured to allocate the resource identifier to the terminal; or the second access network device is further configured to receive the resource identifier from the session management network element.

These aspects or other aspects in this application are made clearer and more intelligible in descriptions in the following embodiments.

### BRIEF DESCRIPTION OF DRAWINGS

FIG. 1 is a schematic flowchart 1 of a session establishment system according to an embodiment of this application;
FIG. 2 is a schematic flowchart 2 of a session establishment system according to an embodiment of this application;
FIG. 3 is a schematic diagram of application of a session establishment system to a 5G network according to an embodiment of this application;
FIG. 4 is a schematic diagram of a hardware structure of a communications device according to an embodiment of this application;
FIG. 5A and FIG. 5B are a schematic flowchart 1 of a session establishment method according to an embodiment of this application;
FIG. 6A and FIG. 6B are a schematic flowchart 2 of a session establishment method according to an embodiment of this application;
FIG. 7A and FIG. 7B are a schematic flowchart 3 of a session establishment method according to an embodiment of this application;
FIG. 8A and FIG. 8B are a schematic flowchart 4 of a session establishment method according to an embodiment of this application;
FIG. 9A and FIG. 9B are a schematic flowchart 5 of a session establishment method according to an embodiment of this application;
FIG. 10 is a schematic structural diagram 1 of an apparatus according to an embodiment of this application;
FIG. 11 is a schematic structural diagram 1 of a session management network element according to an embodiment of this application;
FIG. 12 is a schematic structural diagram 2 of an apparatus according to an embodiment of this application;
FIG. 13 is a schematic structural diagram 3 of an apparatus according to an embodiment of this application; and
FIG. 14 is a schematic structural diagram 2 of a session management network element according to an embodiment of this application.

### DESCRIPTION OF EMBODIMENTS

The following describes the technical solutions in the embodiments of this application with reference to the accompanying drawings in the embodiments of this application. In the descriptions of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists. In addition, in the descriptions of this application, "a plurality of" means two or more than two unless otherwise specified. In addition, to clearly describe the technical solutions in the embodiments of this application, the terms such as "first" and "second" are used in the embodiments of this application to distinguish between same items or similar items that have basically same functions and purposes. A person skilled in the art may understand that the terms such as "first" and "second" do not limit a quantity or an execution sequence, and the terms such as "first" and "second" do not indicate a definite difference.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may learn that with evolution of the network architecture and emergence of a new service scenario, the technical solutions provided in the embodiments of this application are also applicable to similar technical problems.

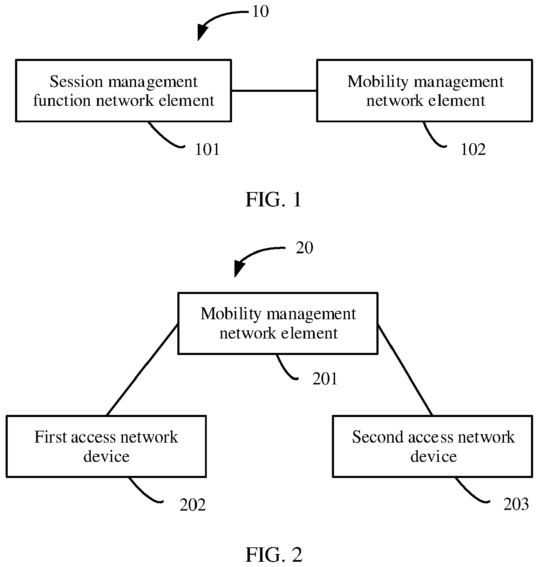

FIG. 1 shows a session establishment system 10 according to an embodiment of this application. The session establishment system 10 includes a session management network element 101 and a mobility management network element 102.

In a possible implementation, the mobility management network element 102 is configured to: receive a first NAS message from a first access network device, and send the first NAS message to the session management network element 101. The first NAS message carries an identifier of a second access network device. The session management network element 101 is configured to: receive the first NAS message from the mobility management network element 102, and send a first message to the mobility management network element 102. The first message is used to indicate a session to be established by using the second access network device corresponding to the identifier of the second access network device.

In another possible implementation, the mobility management network element 102 is configured to: receive a first NAS message from a first access network device, and send the first NAS message to the session management network element 101. The first NAS message is used to request to establish a session. The session management network element 101 is configured to: receive the first NAS message from the mobility management network element 102, and send a first message to the mobility management network element 102. The first message is used to indicate the session to be established by using a second access network device.

Optionally, the session in the embodiments of this application may be, for example, a PDU session. A general description is provided herein. This is not specifically limited in the embodiments of this application.

Optionally, the session in the embodiments of this application may also be referred to as an internet protocol (internet protocol, IP) connection or a transmission control protocol (transmission control protocol, TCP) connection. A general description is provided herein. This is not specifically limited in the embodiments of this application.

Optionally, for session establishment in the embodiments of this application, there may be specifically the following cases: A new session is established on both an air interface side (or an access side) and a core network side. Alternatively, a session resource exists on a core network side, but a new session is established on an air interface side (or an access side), and such a case may also be referred to as session resumption or session update. A general description is provided herein. This is not specifically limited in the embodiments of this application.

Optionally, the session establishment in the embodiments of this application specifically refers to establishment of a user plane of the session. A general description is provided herein, and details are not described below again.

Optionally, the first access network device and the second access network device in the embodiments of this application may be access devices corresponding to a same access technology, or may be access devices corresponding to different access technologies. For example, the first access network device is an access network device corresponding to a 3GPP access technology, and the second access network device is an access network device corresponding to a non-3GPP access technology. Alternatively, the first access network device and the second access network device each are an access network device corresponding to a 3GPP access technology or an access network device corresponding to a non-3GPP access technology. This is not specifically limited in the embodiments of this application.

The 3GPP access technology in the embodiments of this application may be a 5G radio access network (radio access network, RAN) technology or another future 3GPP access technology. The non-3GPP access technology in the embodiments of this application may be a wireless fidelity (wireless fidelity, WiFi) access technology, a wireless local area network (wireless local area networks, WLAN) access technology, a fixed network access technology, or another future non-3GPP access technology. This is not specifically limited in the embodiments of this application.

In the embodiments of this application, the access network device corresponding to the 3GPP access technology may be, for example, a RAN device in a 5G network, an evolved universal terrestrial radio access network (evolved universal terrestrial radio access network, E-UTRAN) device in a 4th generation (4rd generation, 4G) network, or a UTRAN device in a 3rd generation (3rd generation) network. The access network device corresponding to the non-3GPP access technology may be, for example, a non-3GPP interworking function (non-3GPP interworking function, N3IWF) network element, a trusted access gateway, or an access gateway function (access gateway function, AGF) network element corresponding to a fixed network access technology in the 5G network, or an untrusted evolved packet data gateway (evolved packet data gateway, ePDG) or a trusted ePDG in the 4G network. This is not specifically limited in the embodiments of this application.

Optionally, the N3IWF network element in the embodiments of this application may also be referred to as a next generation packet data gateway (next generation packet data gateway, NG-PDG), a non-3GPP access gateway (non-3GPP gateway, N3G-GW), or the like. This is not specifically limited in the embodiments of this application.

Optionally, the session management network element 101 and the mobility management network element 102 in this embodiment of this application may directly communicate with each other, or may communicate with each other through forwarding by another device. This is not specifically limited in this embodiment of this application.

Based on the session establishment system provided in this embodiment of this application, in this embodiment of this application, the first access network device may forward a NAS message, and the second access network device may establish a user plane of a session. Based on a possible difference between functions of the access network devices, a NAS message transfer function can be separated from a session user plane establishment function. Therefore, more diversified services can be provided for a terminal.

Optionally, FIG. 2 shows another session establishment system 20 according to an embodiment of this application. The session establishment system includes a mobility management network element 201, a first access network device 202, and a second access network device 203.

In a possible implementation, the first access network device 202 is configured to send a first NAS message to the mobility management network element 201. The first NAS message carries an identifier of the second access network device. The mobility management network element 201 is configured to: receive the first NAS message from the first access network device 202, and send a second message to the second access network device 203 corresponding to the identifier of the second access network device. The second access network device 203 is configured to: receive the second message from the mobility management network element 201, and establish a session based on the second message.

Alternatively, in another possible implementation, the first access network device 202 is configured to send a first NAS message to the mobility management network element 201. The first NAS message is used to request to establish a session. The mobility management network element 201 is configured to: receive the first NAS message from the first access network device 202, and send a second message to the second access network device 203. The second access network device 203 is configured to: receive the second message from the mobility management network element 201, and establish the session based on the second message.

Optionally, the mobility management network element 201 and the first access network device 202 or the mobility management network element 201 and the second access network device 203 in this embodiment of this application may directly communicate with each other, or may communicate with each other through forwarding by another device. This is not specifically limited in this embodiment of this application.

Based on the session establishment system provided in this embodiment of this application, in this embodiment of this application, the first access network device may forward a NAS message, and the second access network device may establish a user plane of a session. Based on a possible difference between functions of the access network devices, a NAS message transfer function can be separated from a session user plane establishment function. Therefore, more diversified services can be provided for a terminal.

Optionally, the session establishment system 10 shown in FIG. 1 and the session establishment system 20 shown in FIG. 2 may be applied to a 5G network and another future network. This is not specifically limited in the embodiments of the present invention.

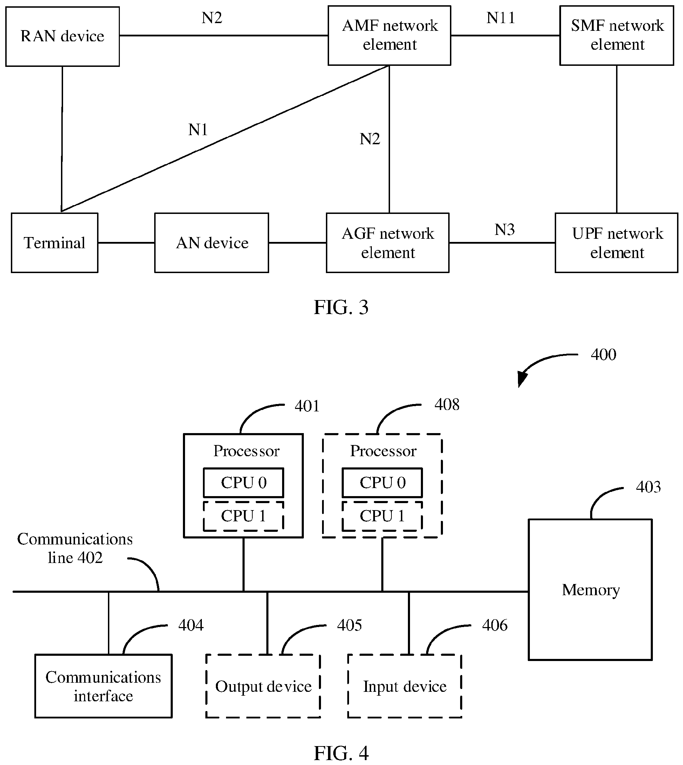

For example, it is assumed that the session establishment system 10 shown in FIG. 1 and the session establishment system 20 shown in FIG. 2 are applied to a 5G network. As shown in FIG. 3, a network element or an entity corresponding to the foregoing mobility management network element may be an AMF network element in the 5G network, a network element or an entity corresponding to the foregoing session management network element may be an SMF network element in the 5G network, a network element or an entity corresponding to the foregoing first access network device may be a RAN device corresponding to a 3GPP access technology, and a network element or an entity corresponding to the foregoing second access network device may be an AGF network element corresponding to a non-3GPP access technology.

In addition, as shown in FIG. 3, the 5G network may further include an access network (access network, AN) device and a UPF network element. A terminal communicates with the AMF network element through a next generation (next generation, N) network interface 1 (N1 for short). On a 3GPP access network side, the terminal accesses the network via the RAN device. On a non-3GPP access network side, the terminal accesses the network via the AN device and the AGF network element. The RAN device and the AGF network element each communicate with the AMF network element through an N2 interface (N2 for short). The AMF network element communicates with the SMF network element through an N11 interface (N11 for short). The AGF network element communicates with the UPF network element through an N3 interface (N3 for short). The UPF network element communicates with the SMF network element through an N4 interface (N4 for short).

Optionally, the AN device in FIG. 3 may be a digital subscriber line access multiplexer (digital subscriber line access multiplexer, DSLAM) device, an optical fiber device, a switch device, a router, or the like. This is not specifically limited in the embodiments of this application.

Although not shown, the 5G network may further include another network element, for example, a unified data management (unified data management, UDM) network element, an AUSF network element, or a policy control function (policy control function, PCF) network element. This is not specifically limited in the embodiments of this application.

It should be noted that, the 5G network shown in FIG. 3 is described by using an example in which the network element or entity corresponding to the first access network device is the RAN device corresponding to the 3GPP access technology and the network element or entity corresponding to the second access network device is the AGF network element corresponding to the non-3GPP access technology. Certainly, as described above, the first access network device and the second access network device may alternatively be other access network devices. For example, the network element or entity corresponding to the first access network device is a first RAN device corresponding to a 3GPP access technology, and the network element or entity corresponding to the second access network device is a second RAN device corresponding to a 3GPP access technology. Alternatively, the network element or entity corresponding to the first access network device is a RAN device corresponding to a 3GPP access technology, and the network element or entity corresponding to the second access network device is an N3IWF network element or a trusted access gateway corresponding to a non-3GPP access technology. This is not specifically limited in the embodiments of this application.

It should be noted that, names of the interfaces between the network elements in FIG. 3 are merely examples and the interfaces may have other names in specific implementation. This is not specifically limited in the embodiments of this application.

It should be noted that, the RAN device, the AN device, the AGF network element, the AMF network element, the SMF network element, the UPF network element, and the like in FIG. 3 are merely names, and the names constitute no limitation on the devices. In the 5G network and the another future network, network elements or network elements corresponding to the RAN device, the AN device, the AGF network element, the AMF network element, the SMF network element, and the UPF network element may have other names. This is not specifically limited in the embodiments of this application. For example, the UPF network element may be replaced by a UPF or a UPF entity. A general description is provided herein, and details are not described below again.

Optionally, the terminal (terminal) in the embodiments of this application may include various handheld devices, vehicle-mounted devices, wearable devices, and computing devices that have a wireless communication function, or other processing devices connected to a wireless modem. The terminal may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) terminal, user equipment (UE), a mobile station (mobile station, MS), a terminal device (terminal device), relay user equipment, or the like. The relay user equipment may be, for example, a 5G residential gateway (residential gateway, RG). For ease of description, the devices mentioned above are collectively referred to as the terminal in this application.

Optionally, the session management network element or the mobility management network element in FIG. 1, or the mobility management network element or the second access device in FIG. 2 may be implemented by one device, or may be implemented jointly by a plurality of devices, or may be one functional module in one device. This is not specifically limited in the embodiments of this application. It can be understood that, the foregoing functions may be network elements in a hardware device, or may be software functions running on dedicated hardware, or may be virtualization functions instantiated on a platform (for example, a cloud platform).

For example, the session management network element or the mobility management network element in FIG. 1, or the mobility management network element or the second access device in FIG. 2 may be implemented by a communications device in FIG. 4. FIG. 4 is a schematic diagram of a hardware structure of a communications device according to an embodiment of this application. The communications device 400 includes at least one processor 401, a communications line 402, a memory 403, and at least one communications interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions of this application.

The communications line 402 may include a path, to transfer information between the foregoing components.

The communications interface 404, which uses any apparatus such as a transceiver, is configured to communicate with another device or communications network, such as the Ethernet, a RAN, or a WLAN.

The memory 403 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, or the like), a magnetic disk storage medium or another magnetic storage device, or any other medium that can be used to carry or store expected program code in a form of an instruction or a data structure and that can be accessed by a computer. However, the memory 403 is not limited thereto. The memory may exist independently, and is connected to the processor by using the communication line 402. The memory may alternatively be integrated with the processor.

The memory 403 is configured to store a computer-executable instruction for executing the solutions of this application, and the processor 401 controls the execution. The processor 401 is configured to execute the computer-executable instruction stored in the memory 403, to implement a session establishment method provided in the following embodiments of this application.

Optionally, the computer-executable instruction in the embodiments of this application may also be referred to as application program code. This is not specifically limited in the embodiments of this application.

During specific implementation, in an embodiment, the processor 401 may include one or more CPUs, for example, a CPU 0 and a CPU 1 in FIG. 4.

During specific implementation, in an embodiment, the communications device 400 may include a plurality of processors, for example, the processor 401 and a processor 408 in FIG. 4. Each of the processors may be a single-core (single-CPU) processor or a multi-core (multi-CPU) processor. The processor herein may be one or more devices, circuits, and/or processing cores for processing data (for example, computer program instructions).

During specific implementation, in an embodiment, the communications device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The communications device 400 may be a general-purpose device or a dedicated device. During specific implementation, the communications device 400 may be a desktop computer, a portable computer, a network server, a personal digital assistant (personal digital assistant, PDA), a mobile phone, a tablet computer, a wireless terminal device, an embedded device, or a device with a structure similar to that in FIG. 4. A type of the communications device 400 is not limited in this embodiment of this application.

The following describes in detail a session establishment method provided in embodiments of this application with reference to FIG. 1 to FIG. 4.

It should be noted that, names of messages or parameters in the messages between network elements in the following embodiments of this application are merely examples, and the messages or the parameters may have other names in specific implementation. A general description is provided herein. This is not specifically limited in the embodiments of this application.

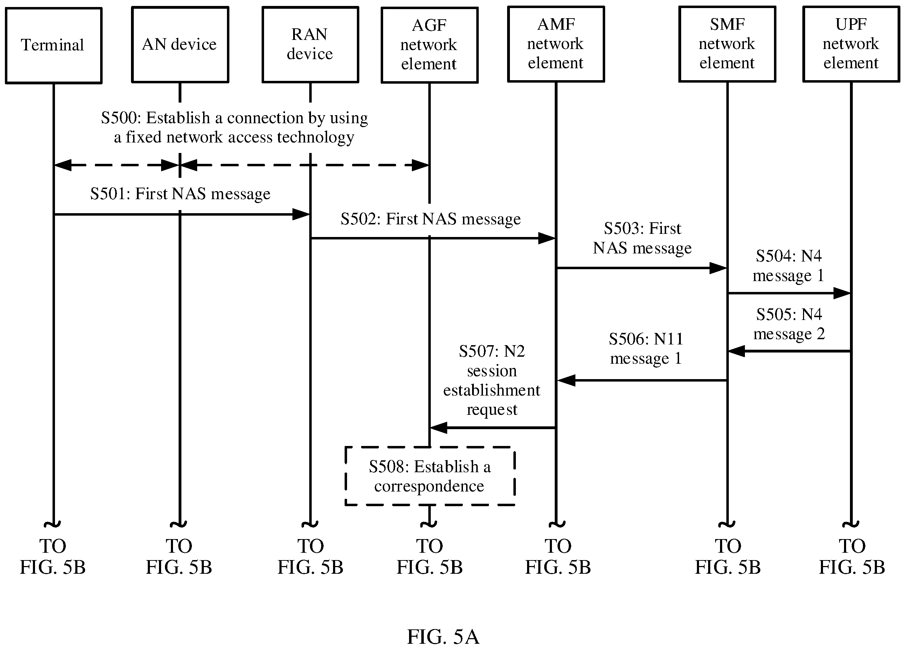

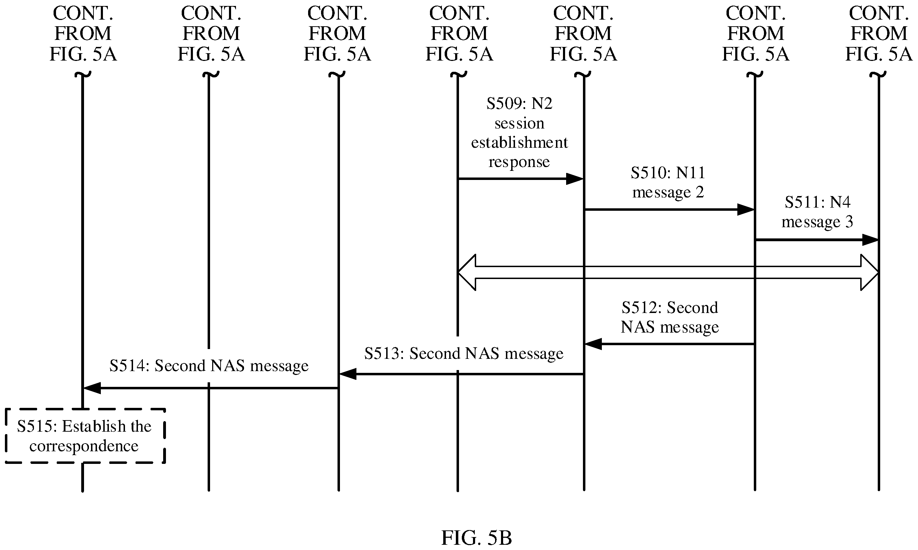

For example, the session establishment system shown in FIG. 1 or FIG. 2 is applied to the 5G network shown in FIG. 3. FIG. 5A and FIG. 5B show a session establishment method according to an embodiment of this application. The session establishment method includes the following steps.

S500: A terminal establishes a connection to an AGF network element by using a fixed network access technology.

For a specific implementation in which the terminal establishes the connection to the AGF network element by using the fixed network access technology, refer to an existing implementation. Details are not described herein.

In this embodiment of this application, the terminal may initiate different procedures, and establish different connections to the AGF network element by using a fixed network access technology, to obtain different information.

For example, the terminal may initiate a point-to-point protocol over ethernet (point-to-point protocol over ethernet, PPPoE) procedure, and establish a PPPoE connection to the AGF network element by using a fixed network access technology. After the PPPoE procedure ends, the terminal may obtain an a media access control (media access control, MAC) address of the AGF, and the MAC address of the AGF may be used as an identifier of the AGF network element. Optionally, after the PPPoE procedure ends, the terminal may further obtain a PPPoE session identifier (session identity, session ID), and the PPPoE session ID may be used as a resource identifier, where the resource identifier is used by the AGF network element to identify a session. Optionally, after the PPPoE procedure ends, the terminal may further obtain an IP address of the terminal, and the IP address of the terminal may be used as a terminal identifier, where the terminal identifier is used by the AGF network element to identify the terminal.

For another example, the terminal may initiate an internet protocol over ethernet (internet protocol over ethernet, IPoE) procedure, and establish an IPoE connection to the AGF network element by using a fixed network access technology. After the IPoE procedure ends, the terminal may obtain at least one of an MAC address of the AGF and an IP address of the AGF, and the MAC address of the AGF or the IP address of the AGF may be used as an identifier of the AGF network element. Optionally, after the IPoE procedure ends, the terminal may obtain an IP address of the terminal. The IP address of the terminal may be used as a terminal identifier, where the terminal identifier is used by the AGF network element to identify the terminal.

For another example, the terminal may initiate an extensible authentication protocol over a local area network (extensible authentication protocol over LAN (local area network, LAN), EAPoL) procedure, and establish an EAPoL connection to the AGF network element by using a fixed network access technology. After the EAPoL procedure ends, the terminal may obtain an MAC address of the AGF or an AGF ID, and the MAC address of the AGF or the AGF ID may be used as an identifier of the AGF network element.

It should be noted that, in this embodiment of this application, step S500 is an optional step. Step S500 may be skipped, and step S501 may be directly performed. This is not specifically limited in this embodiment of this application.

S501: The terminal sends a first NAS message to a RAN device, and the RAN device receives the first NAS message from the terminal, where the first NAS message is used to request to establish a session.

Optionally, if session establishment in this embodiment of this application refers to the foregoing establishment of a new session, the first NAS message may be, for example, a PDU session establishment request (PDU session establishment request) message. Alternatively, if session establishment in this embodiment of this application refers to the foregoing session resumption or session update, the first NAS message may be, for example, a PDU session update request (PDU session update request) message. This is not specifically limited in this embodiment of this application.

If step S500 is performed before step S501, the first NAS message may carry the following first information.
Case 1: The first NAS message carries an identifier of the AGF network element. The identifier of the AGF network element may be, for example, the MAC address of the AGF, the IP address of the AGF, or the AGF ID in step S500, or may be a fully qualified domain name (fully qualified domain name, FQDN) identifier or another logical identifier of the AGF network element. This is not specifically limited in this embodiment of this application.
Case 2: The first NAS message carries an identifier of the AGF network element and a terminal identifier. For a related description of the identifier of the AGF network element, refer to Case 1. Details are not described herein. The terminal identifier is used by the AGF network element to identify the terminal. The terminal identifier may be a local temporary identifier allocated by the AGF network element to the terminal in step S500, for example, a globally unique temporary identifier (globally unique temporary identity, GUTI) or an IP address of the terminal. Alternatively, the terminal identifier may be a device identifier of the terminal, for example, a MAC address or an international mobile subscriber identity (International Mobile Subscriber Identity, IMSI) of the terminal. This is not specifically limited in this embodiment of this application.
Case 3: The first NAS message carries an identifier of the AGF network element, a terminal identifier, and a resource identifier. For descriptions of the identifier of the AGF network element and the terminal identifier, refer to Case 2. Details are not described herein. The resource identifier is used by the AGF network element to identify the session. The resource identifier may be obtained in step S500, for example, may be the PPPoE session ID in step S500. Alternatively, the resource identifier may be a virtual link identifier (virtual line ID), a virtual local area network (virtual local area network, VLAN) identifier, or the like obtained by the terminal. This is not specifically limited in this embodiment of this application.
Case 4: The first NAS message carries an identifier of the AGF network element and a resource identifier. For a description of the identifier of the AGF network element, refer to Case 1. For a description of the resource identifier, refer to Case 3. Details are not described herein.
   If step S500 is skipped before step S501, the first NAS message may carry the following information.
Case 5: The first NAS message carries a terminal identifier. The terminal identifier is used by the AGF network element to identify the terminal. The terminal identifier may be a device identifier of the terminal, for example, a MAC address or an IMSI of the terminal. This is not specifically limited in this embodiment of this application.
Case 6: The first NAS message carries a resource identifier. The resource identifier is used by the AGF network element to identify the session. The resource identifier may be a virtual link identifier obtained by the terminal, or the like. This is not specifically limited in this embodiment of this application.
Case 7: The first NAS message carries a terminal identifier and a resource identifier. For a description of the terminal identifier, refer to Case 5. For a description of the resource identifier, refer to Case 6. Details are not described herein.
Case 8: The first NAS message is the same as a first NAS message in the prior art.

Optionally, in Case 1 to Case 7, the first NAS message may further carry first indication information in addition to the foregoing first information. The first indication information is used by the terminal to request selection of another access network device for the session. For example, in this embodiment of this application, the first indication information may be a fixed network access (fixed access) indication information.

Certainly, in Case 1 to Case 7, the first NAS message may further carry information such as a session identifier and location information of the terminal. For details, refer to an existing implementation. Details are not described herein.

S502: The RAN device sends the first NAS message to an AMF network element, and the AMF network element receives the first NAS message from the RAN device.

S503: The AMF network element sends the first NAS message to an SMF network element, and the SMF network element receives the first NAS message from the AMF network element.

S504: After the SMF network element selects a UPF network element for the session requested by the terminal, the SMF network element sends an N4 message 1 to the UPF network element, and the UPF network element receives the N4 message 1 from the SMF network element.

Optionally, in this embodiment of this application, the SMF network element may select an appropriate UPF network element based on a data network name (Data network name, DNN) or a session and service continuity (session and service continuity, SSC) mode in the first NAS message. For details, refer to an existing implementation. Details are not described herein.

Optionally, in this embodiment of this application, the N4 message 1 may carry service flow description information, quality of service (quality of service, QoS) parameters, and the like that are related to the session. Certainly, if a tunnel identifier that is of an N3 tunnel between the AGF network element and the UPF network element and is on a UPF network element side is allocated by the SMF network element, the N4 message 1 further carries the tunnel identifier of the N3 tunnel on the UPF network element side. For details, refer to an existing implementation. Details are not described herein. The tunnel identifier in this embodiment of this application may include, for example, an endpoint address or an endpoint identifier. The endpoint identifier may be, for example, a tunnel endpoint identifier (tunnel endpoint identifier, TEID). A general description is provided herein. This is not specifically limited in this embodiment of this application.

S505: The UPF network element sends an N4 message 2 to the SMF network element, and the SMF network element receives the N4 message 2 from the UPF network element.

The N4 message 2 may carry tunnel uplink information of the N3 tunnel. The tunnel uplink information includes the tunnel identifier of the N3 tunnel on the UPF network element side, an address of the UPF network element, and the like. For details, refer to an existing implementation. Details are not described herein.

S506: The SMF network element sends an N11 message 1 to the AMF network element, and the AMF network element receives the N11 message 1 from the SMF network element.

The N11 message 1 may carry N2 service management (service management, SM) information (information). The N2 SM information is parameters that are related to the session and are sent to the AGF network element. The parameters include the session identifier, a QoS profile (profile), a session-aggregate maximum bit rate (aggregate maximum bit rate, AMBR), core network side tunnel information such as the tunnel identifier of the N3 tunnel on the UPF network element side, or the like. This is not specifically limited in this embodiment of this application.

Optionally, the N11 message 1 in this embodiment of this application may be, for example, a Namf_Communication_N1 N2 Message Transfer message or a Nsmf_PDU Session_Create SM Context Response message in the establishment of the new session, or a Namf_Communication_N1 N2 Message Transfer message or a Nsmf_PDU Session_Update SM Context Response message in the session resumption or session update. This is not specifically limited in this embodiment of this application.

Optionally, if the first NAS message carries the terminal identifier, the N2 SM information further includes the terminal identifier. This is not specifically limited in this embodiment of this application.

Optionally, if the first NAS message carries the resource identifier, the N2 SM information further includes the resource identifier. After obtaining the resource identifier, the AGF network element may establish a correspondence between the session identifier and the resource identifier. This is not specifically limited in this embodiment of this application.

Optionally, if the first NAS message does not carry the resource identifier, after the SMF network element determines a resource identifier, the resource identifier may be carried in the N2 SM information. After obtaining the resource identifier, the AGF network element may establish a correspondence between the session identifier and the resource identifier. This is not specifically limited in this embodiment of this application.

Optionally, if the resource identifier carried in the first NAS message is a virtual line identifier, the SMF network element may re-determine a subscribed line identifier and the virtual line identifier as a resource identifier. The resource identifier is used in a subsequent session establishment process. This is not specifically limited in this embodiment of this application.

S507: The AMF network element sends an N2 session establishment request to the AGF network element, and the AGF network element receives the N2 session establishment request from the AMF network element.

The N2 session establishment request may carry the N2 SM information and an N2 interface AMF network element side terminal identifier allocated by the AMF network element to the terminal. The N2 interface AMF network element side terminal identifier is used by an AMF network element side to identify the terminal.

Optionally, in this embodiment of this application, the SMF network element may select the AGF network element, or the AMF network element may select the AGF network element. This is not specifically limited in this embodiment of this application.

Optionally, in this embodiment of this application, the SMF network element may select the AGF network element after the SMF network element allows selection of the another access network device for the session. Alternatively, the AMF network element may select the AGF network element after the AMF network element allows selection of the another access network device for the session. Alternatively, the AMF network element may select the AGF network element after both the SMF network element and the AMF network element allow selection of the another access network device for the session. This is not specifically limited in this embodiment of this application.

For example, in this embodiment of this application, the SMF network element may allow, based on at least one of the location information of the terminal, subscription data of the terminal, the first indication information, or a local policy, the selection of the another access network device for the session. The first indication information is used by the terminal to request selection of the another access network device for the session. For example, if there is an available AGF network element at a location of the terminal, the SMF network element allows the selection of the another access network device for the session. Alternatively, if the SMF network element receives the first indication information sent by the terminal, the SMF network element allows the selection of the another access network device for the session. Alternatively, if the subscription data of the terminal includes an indication that selection of an access network device for the session is allowed, the SMF network element allows the selection of the another access network device for the session. Alternatively, if the local policy of the SMF network element allows the selection of the another access network device for the session, the SMF network element allows the selection of the another access network device for the session. Alternatively, when the terminal is at a specific location, the SMF network element allows, based on the subscription data of the terminal and the location information of the terminal, the selection of the another access network device for the session.

After the SMF network element allows the selection of the another access network device for the session, the SMF network element may select the another access network device for the session.

In a possible implementation, in Case 1 to Case 4, that is, when the first NAS message carries the identifier of the AGF network element, the SMF network element may select the AGF network element for the session based on the identifier of the AGF network element.

In another possible implementation, in Case 5 to Case 8, that is, when the first NAS message does not carry the identifier of the AGF network element, the SMF network element may select an AGF network element for the session based on the location information of the terminal. For example, the SMF network element may select, for the session based on the location information of the terminal, an AGF network element closest to the terminal. Alternatively, the SMF network element may select, for the session based on the location information of the terminal, an AGF network element with lightest load from AGF network elements whose service areas can cover the location of the terminal.

Alternatively, for example, in this embodiment of this application, the AMF network element may allow, based on at least one of the location information of the terminal, subscription data of the terminal, the first indication information, or a local policy, the selection of the another access network device for the session. After the AMF network element allows the selection of the another access network device for the session, the AMF network element may select the another access network device for the session. For related implementation, refer to the foregoing description in which the SMF network element allows the selection of the another access network device for the session and the SMF network element selects the another access network device for the session. Details are not described herein.

Alternatively, for example, in this embodiment of this application, the SMF network element may allow, based on at least one of the location information of the terminal, subscription data of the terminal, the first indication information, or a local policy, the selection of the another access network device for the session. The first indication information is used by the terminal to request selection of the another access network device for the session. After the SMF network element allows the selection of the another access network device for the session, the SMF network element adds third indication information to the N11 message 1 sent to the AMF network element. The third indication information is used to indicate that the selection of the another access network device for the session is allowed. Further, the AMF network element may allow, based on the third indication information and at least one of the location information of the terminal, the subscription data of the terminal, the first indication information, or a local policy, the selection of the another access network device for the session. For example, if the local policy allows the selection of the another access network device for the session, the SMF network element allows the selection of the another access network device for the session. Further, the SMF network element may add the third indication information to the N11 message 1 sent to the AMF network element. After obtaining the third indication information, the AMF network element may learn that the SMF network element allows the selection of the another access network device for the session. In this case, if the local policy of the AMF network element allows the selection of the another access network device for the session, the AMF network element allows the selection of the another access network device for the session.

After the AMF network element allows the selection of the another access network device for the session, the AMF network element may select the another access network device for the session. For related implementation, refer to the foregoing description in which the SMF network element selects the another access network device for the session, and an only difference from the foregoing description lies in that the SMF network element needs to be replaced by the AMF network element. Details are not described herein.

Optionally, in Case 1 to Case 4, that is, when the first NAS message carries the identifier of the AGF network element, the third indication information may be the identifier of the AGF network element. This is not specifically limited in this embodiment of this application. Certainly, in this embodiment of this application, because the RAN device and the AGF network element correspond to different access technologies, the third indication information in this embodiment of this application may alternatively be a fixed network access indication information. This is not specifically limited in this embodiment of this application.

Optionally, in this embodiment of this application, if the SMF network element selects the AGF network element, the SMF network element further adds the identifier of the AGF network element to the N11 message 1 sent to the AMF network element, and the AMF network element sends the N2 session establishment request to the AGF network element based on the identifier of the AGF network element. This is not specifically limited in this embodiment of this application.

S508: The AGF network element establishes the correspondence between the resource identifier and the session identifier.

In this case, in a subsequent data transmission process, after receiving a data packet from the terminal, the AGF network element may determine, based on a resource identifier carried in the data packet and the correspondence between the session identifier and the resource identifier, a session identifier corresponding to the data packet, and perform data transmission on a session resource corresponding to the session identifier. This is not specifically limited in this embodiment of this application.

Optionally, in this embodiment of this application, the AGF network element may further store the N2 interface AMF network element side terminal identifier allocated by the SMF network element to the terminal, and parameters such as the core network side tunnel information and the QoS profile that are carried in the N2 SM information, and allocate an N2 interface AGF network element side terminal identifier to the terminal. The N2 interface AGF network element side terminal identifier is used by the AGF network element to identify the terminal.

Optionally, in this embodiment of this application, if the N2 SM information does not carry the resource identifier, the AGF network element may allocate a resource identifier to the session. The resource identifier may be, for example, the MAC address of the AGF or the VLAN ID. This is not specifically limited in this embodiment of this application. Optionally, in this embodiment of this application, if the N2 SM information does not carry the resource identifier, after the AGF network element receives the N2 SM information, the AGF network element may establish one or more corresponding child (child) security associations (security association, SA) for the PDU session based on the received QoS profile in the SM information. In this case, the AGF network element may determine an identifier of the child SA as a resource identifier. This is not specifically limited in this embodiment of this application.

Certainly, in this embodiment of this application, if the N2 SM information does not carry the resource identifier and the AGF network element cannot obtain a resource identifier, step S508 is not performed. A general description is provided herein, and details are not described below again. For example, when one session corresponds to only one resource, the N2 SM information may not carry the resource identifier, and the AGF network element cannot obtain a resource identifier. In this case, step S508 is not required.

Optionally, in this embodiment of this application, if the N2 SM information does not carry the terminal identifier, the AGF network element may further allocate a terminal identifier. The terminal identifier may be, for example, the local temporary identifier allocated by the AGF network element to the terminal, and the local temporary identifier is used by the AGF network element to identify the terminal. This is not specifically limited in this embodiment of this application.

S509: The AGF network element sends an N2 session establishment response to the AMF network element, and the AMF network element receives the N2 session establishment response from the AGF network element.

The N2 session establishment response carries the N2 interface AMF network element side terminal identifier, the N2 interface AGF network element side terminal identifier, and tunnel downlink information of the N3 tunnel between the AGF network element and the UPF network element. The tunnel downlink information may include a tunnel identifier of the N3 tunnel on an AGF network element side, an address of the AGF network element, and the like. For details, refer to an existing implementation. Details are not described herein.

In addition, corresponding to the first information in Case 1 to Case 8 in step S501, the N2 session establishment response may further carry the following second information.

In Case 1, the N2 session establishment response may further carry the terminal identifier allocated by the AGF network element. Optionally, the N2 session establishment response may further carry the resource identifier allocated by the AGF network element or the resource identifier obtained from the SMF network element. This is not specifically limited in this embodiment of this application.

In Case 2, optionally, the N2 session establishment response may further carry the resource identifier allocated by the AGF network element or the resource identifier obtained from the SMF network element. This is not specifically limited in this embodiment of this application.

In Case 4, the N2 session establishment response may further carry the terminal identifier allocated by the AGF network element.

In Case 5, the N2 session establishment response may further carry the identifier of the AGF network element. Optionally, the N2 session establishment response may further carry the resource identifier allocated by the AGF network element or the resource identifier obtained from the SMF network element. This is not specifically limited in this embodiment of this application.

In Case 6, the N2 session establishment response may further carry the identifier of the AGF network element and the terminal identifier allocated by the AGF network element.

In Case 7, the N2 session establishment response may further carry the identifier of the AGF network element.

In Case 8, the N2 session establishment response may further carry the identifier of the AGF network element and the terminal identifier allocated by the AGF network element. Optionally, the N2 session establishment response may further carry the resource identifier allocated by the AGF network element or the resource identifier obtained from the SMF network element. This is not specifically limited in this embodiment of this application.

S510: The AMF network element sends an N11 message 2 to the SMF network element, and the SMF network element receives the N11 message 2 from the AMF network element.

The N11 message 2 carries the second information and the tunnel downlink information in step S509.

Optionally, in this embodiment of this application, the N11 message 2 may further carry second indication information. The second indication information is used to indicate that the session is established by using the AGF network element, and may be represented in a plurality of forms. This is not specifically limited in this embodiment of this application. Certainly, in this embodiment of this application, because the RAN device and the AGF network element correspond to different access technologies, the second indication information in this embodiment of this application may be the fixed network access indication information. This is not specifically limited in this embodiment of this application.

It should be noted that, if this embodiment of this application is described by using an example in which an access network device corresponding to another access technology is used as the second access network device, instead of an example in which an AGF entity corresponding to the fixed network access technology is used as the second access network device, the first indication information, the second indication information, and the third indication information may alternatively be an indication of the another access technology. For example, if the second access network device is an access network device corresponding to a WLAN access technology, the first indication information, the second indication information, and the third indication information may alternatively be a WLAN access indication; if the second access network device is an access network device corresponding to a Wi-Fi access technology, the first indication information, the second indication information, and the third indication information may alternatively be a Wi-Fi access indication information. A general description is provided herein. This is not specifically limited in this embodiment of this application.

S511: The SMF network element sends an N4 message 3 to the UPF network element, and the UPF network element receives the N4 message 3 from the SMF network element.

The N4 message 3 carries the tunnel downlink information.

Until now, a user plane path corresponding to the session is established between the AGF network element and the UPF network element.

S512: The SMF network element sends a second NAS message to the AMF network element, and the AMF network element receives the second NAS message from the SMF network element.

The second NAS message carries the second information in step S509. Optionally, the second NAS message may further carry the second indication information in step S510 or second indication information generated by the SMF network element based on the second information. This is not specifically limited in this embodiment of this application.

Certainly, the second NAS message may further carry other information such as the session identifier. For details, refer to an existing implementation. Details are not described in this embodiment of this application.

Optionally, if the first NAS message is the PDU session establishment request, the second NAS message may be, for example, a PDU session establishment accept (PDU session establishment accept) message. If the first NAS message is the PDU session update request, the second NAS message may be, for example, a PDU session update accept (PDU session update accept) message. This is not specifically limited in this embodiment of this application.

It should be noted that, in this embodiment of this application, there is no necessary execution sequence between step S511 and step S512. Step S511 may be performed before or after step S512, or step S511 and step S512 may be performed simultaneously. This is not specifically limited in this embodiment of this application.

S513: The AMF network element sends the second NAS message to the RAN device, and the RAN device receives the second NAS message from the AMF network element.

S514: The RAN device sends the second NAS message to the terminal, and the terminal receives the second NAS message from the RAN device.

S515: The terminal establishes the correspondence between the resource identifier and the session identifier.

In this case, in the subsequent data transmission process, the terminal may perform, based on the correspondence between the session identifier and the resource identifier, data transmission on a resource corresponding to a specific resource identifier. This is not specifically limited in this embodiment of this application.

Until now, a path corresponding to the session is established between the terminal and the UPF network element.

Certainly, in this embodiment of this application, when one session corresponds to only one resource, the session identifier may be used as a resource identifier. In this case, step S515 may not be performed. A general description is provided herein, and details are not described below again.

According to the session establishment method provided in this embodiment of this application, in this embodiment of this application, the RAN device may forward a NAS message, and the AGF network element may establish a user plane of a session. Based on a possible difference between functions of access network devices, a NAS message transfer function can be separated from a session user plane establishment function. Therefore, more diversified services can be provided for the terminal.

Actions of the terminal or the SMF network element in steps S501 to S515 may be performed by the processor 401 in the communications device 400 shown in FIG. 4 by invoking the application program code stored in the memory 403. This is not limited in this embodiment of this application.

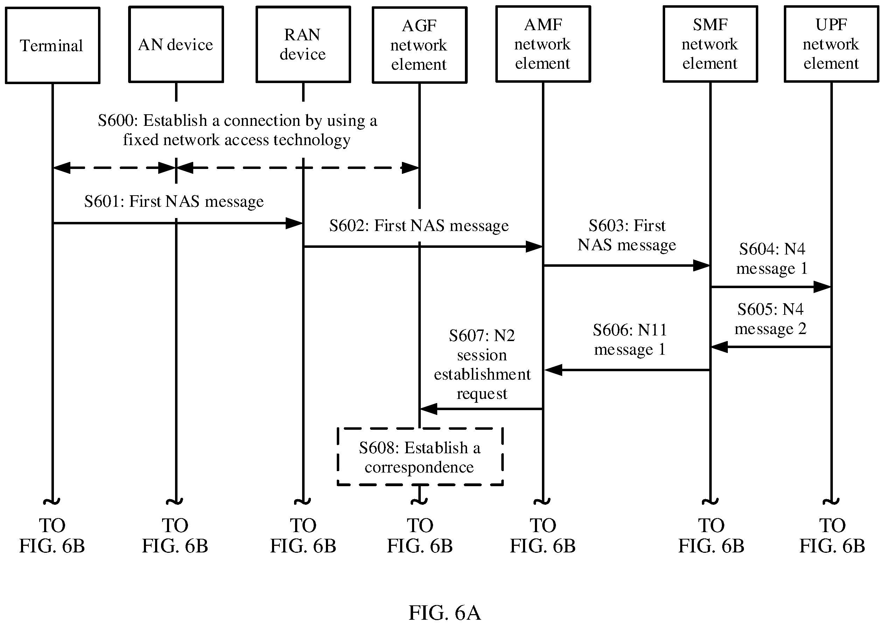

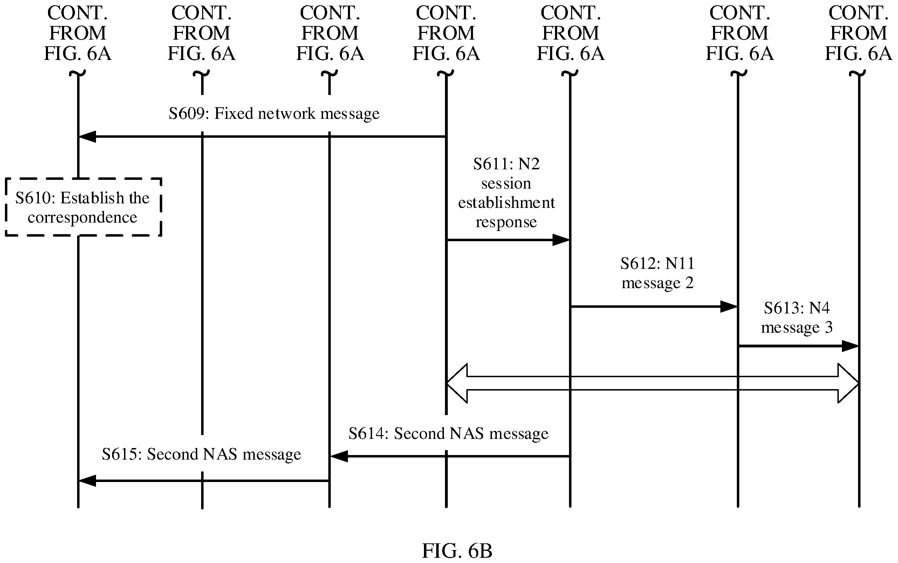

Optionally, for example, the session establishment system shown in FIG. 1 or FIG. 2 is applied to the 5G network shown in FIG. 3. FIG. 6A and FIG. 6B show another session establishment method according to an embodiment of this application. The session establishment method includes the following steps.

S601 to S608: Similar to steps S501 to S508. An only difference lies in that, in this embodiment of this application, an N11 message 1 further carries a second NAS message, and the second NAS message may be a PDU session establishment accept message, a PDU session update accept message, or another NAS message. For details, refer to an existing description. Details are not described in this embodiment of this application. For related descriptions of steps S601 to S608, refer to the embodiment shown in FIG. 5A and FIG. 5B. Details are not described herein.

S609: An AGF network element sends a fixed network message to a terminal, and the terminal receives the fixed network message from the AGF network element.

The fixed network message carries second information. For a related description of the second information, refer to step S509. Details are not described herein.

It should be noted that step S609 is an optional step. For example, if a first NAS message carries first information shown in Case 3, step S609 may not be performed. A general description is provided herein, and details are not described below again.

S610: The terminal establishes a correspondence between a resource identifier and a session identifier.

Until now, a path corresponding to a session is established between the AGF network element and the terminal.

Certainly, in this embodiment of this application, when one session corresponds to only one resource, the session identifier may be used as a resource identifier. In this case, step S610 may not be performed. A general description is provided herein, and details are not described below again.

S611 to S613: Similar to steps S509 to S511. An only difference lies in that, in this embodiment of this application, the AGF network element does not need to send the second information to an SMF network element. In other words, an N2 session establishment response in step S611 and an N11 message 2 in step S612 do not carry the second information. For related descriptions, refer to the embodiment shown in FIG. 5A and FIG. 5B. Details are not described herein.

Until now, a path corresponding to the session is established between the AGF network element and a UPF network element.

Although not shown, after step S613, the UPF network element further sends a response message to the SMF network element, and the SMF network element sends the response message to an AMF network element. The response message is used to indicate that the path corresponding to the session has been established between the AGF network element and the UPF network element. In this case, after receiving the response message from the SMF network element, the AMF network element may perform the following step S614. For details, refer to an existing implementation. Details are not described herein.

S614: The AMF network element sends the second NAS message to a RAN device, and the RAN device receives the second NAS message from the AMF network element.

Optionally, the second NAS message in this embodiment of this application may further carry second indication information generated by the SMF network element. This is not specifically limited in this embodiment of this application. For a related description of the second indication information, refer to step S510 in the embodiment shown in FIG. 5A and FIG. 5B. Details are not described in this embodiment of this application.

Optionally, in this embodiment of this application, when the second information includes an identifier of the AGF network element, if the SMF network element selects the AGF network element, the identifier of the AGF network element may be sent to the RAN device by using the second NAS message, and then sent by the RAN device to the terminal by using the second NAS message. Other information in the second information is sent to the terminal by using the fixed network message. This is not specifically limited in this embodiment of this application. Alternatively, when the second information includes the resource identifier and the resource identifier is obtained from the SMF network element, the resource identifier may be sent to the RAN device by using the second NAS message, and then sent by the RAN device to the terminal by using the second NAS message. Other information in the second information is sent to the terminal by using the fixed network message. This is not specifically limited in this embodiment of this application.

S615: The RAN device sends the second NAS message to the terminal, and the terminal receives the second NAS message from the RAN device.

According to the session establishment method provided in this embodiment of this application, more diversified services can be provided for the terminal. For a related analysis, refer to the embodiment shown in FIG. 5A and FIG. 5B. Details are not described herein.

Actions of the terminal or the SMF network element in steps S601 to S615 may be performed by the processor 401 in the communications device 400 shown in FIG. 4 by invoking the application program code stored in the memory 403. This is not limited in this embodiment of this application.

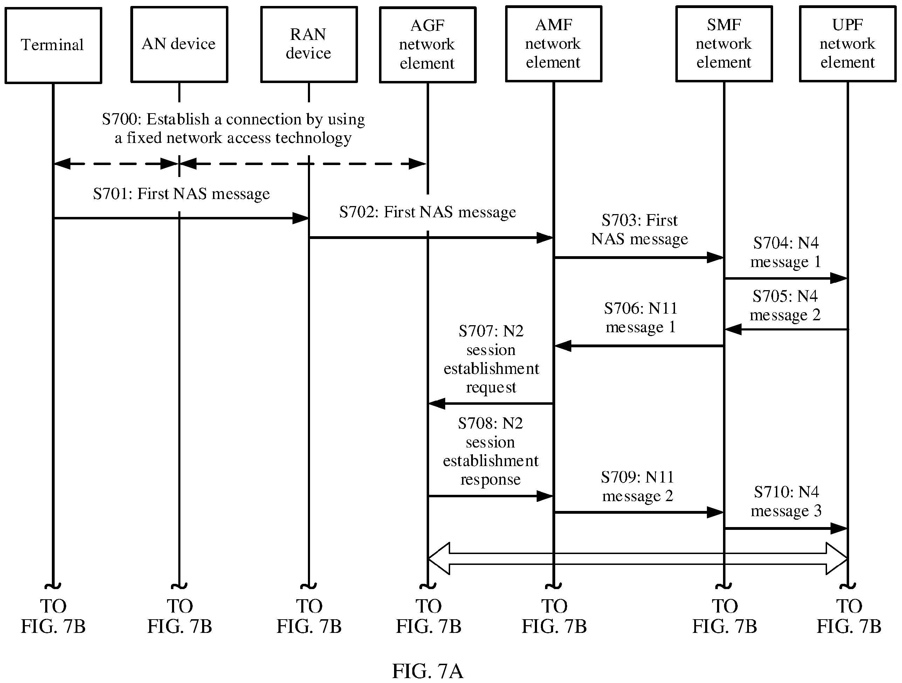

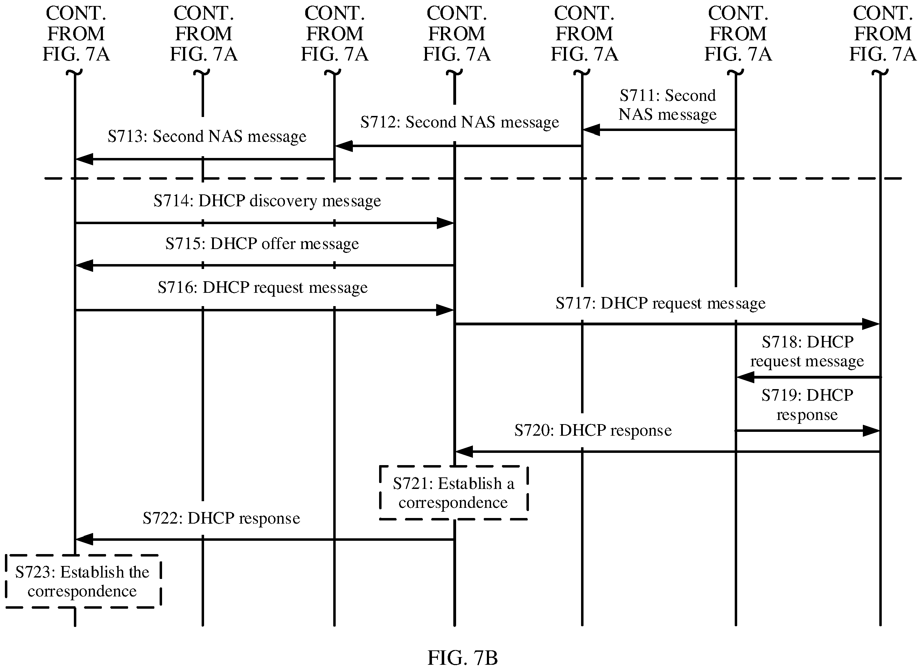

Optionally, for example, the session establishment system shown in FIG. 1 or FIG. 2 is applied to the 5G network shown in FIG. 3. FIG. 7A and FIG. 7B show still another session establishment method according to an embodiment of this application. The session establishment method includes the following steps.

S700 to S713: Similar to steps S500 to S507 and steps S509 to S514. An only difference lies in that, in this embodiment of this application, one session corresponds to one resource, and a terminal does not need to obtain a resource identifier. For related descriptions, refer to the embodiment shown in FIG. 5A and FIG. 5B. Details are not described herein.

Optionally, if a session between the terminal and an AGF network element has not been established, the terminal may further initiate a session establishment procedure between the terminal and the AGF network element based on an identifier of the AGF network element. For example, the session establishment method provided in this embodiment of this application further includes the following steps.

S714: The terminal sends a dynamic host configuration protocol (dynamic host configuration protocol, DHCP) discovery (discovery) message to the AGF network element, and the AGF network element receives the DHCP discovery message from the terminal.

Optionally, the DHCP discovery message may carry the foregoing terminal identifier. In this case, the AGF network element may identify the terminal based on the terminal identifier. Alternatively, the AGF network element may identify the terminal based on a MAC address of the terminal carried in a layer 2 (level2, L2) packet header. This is not specifically limited in this embodiment of this application.

S715: The AGF network element sends a DHCP offer (offer) message to the terminal, and the terminal receives the DHCP offer message from the AGF network element. The DHCP offer message carries an IP address of the AGF network element.

Optionally, in this embodiment of this application, if the terminal may obtain the IP address of the AGF network element before step S714, for example, the identifier of the AGF network element obtained by the terminal is specifically the IP address of the AGF network element, steps S714 and S715 may be skipped, and step S716 may be directly performed. This is not specifically limited in this embodiment of this application.

S716: The terminal sends a DHCP request message to the AGF network element, and the AGF network element receives the DHCP request message from the terminal. The DHCP request message is used to request an IP address of the terminal.

Specifically, the terminal may send the DHCP request message to the AGF network element based on the IP address of the AGF network element. The DHCP request message may carry a session identifier. In this case, after receiving the DHCP request message from the terminal, the AGF network element may determine, based on the session identifier, a user plane corresponding to the session. In addition, the DHCP request message may further carry the terminal identifier. The AGF network element may identify the terminal based on the terminal identifier. Optionally, the AGF network element may identify the terminal based on the MAC address of the terminal carried in the layer 2 packet header. This is not specifically limited in this embodiment of this application.

S717: The AGF network element sends the DHCP request message to a UPF network element, and the UPF network element receives the DHCP request message from the AGF network element.

S718: The UPF network element sends the DHCP request message to the SMF network element, and the SMF network element receives the DHCP request message from the UPF network element.

S719: The SMF network element sends a DHCP response to the UPF network element, and the UPF network element receives the DHCP response from the SMF network element, where the DHCP response carries the IP address information of the terminal.

S720: The UPF network element sends the DHCP response to the AGF network element, and the AGF network element receives the DHCP response from the UPF network element.

S721: The AGF obtains the IP address information of the terminal from the DHCP response and uses the IP address information of the terminal as the resource identifier; and stores a correspondence between the session identifier and the resource identifier.

S722: The AGF network element sends the DHCP response to the terminal, and the terminal receives the DHCP response from the AGF network element.

S723: The terminal obtains the IP address information of the terminal from the DHCP response and uses the IP address information of the terminal as the resource identifier; and stores the correspondence between the session identifier and the resource identifier.

It should be noted that, in this embodiment of this application, both step S721 and step S723 are optional steps. In other words, in this embodiment of this application, the IP address information of the terminal may be used as the resource identifier, and the AGF network element and the terminal each establish a correspondence between the IP address information of the terminal and the session identifier. Certainly, in this embodiment of this application, one session corresponds to one resource. Therefore, step S721 and step S723 may not be performed, and data is transmitted based on the session identifier during subsequent data transmission. This is not specifically limited in this embodiment of this application.

According to the session establishment method provided in this embodiment of this application, more diversified services can be provided for the terminal. For a related analysis, refer to the embodiment shown in FIG. 5A and FIG. 5B. Details are not described herein.

Actions of the terminal or the SMF network element in steps S701 to S723 may be performed by the processor 401 in the communications device 400 shown in FIG. 4 by invoking the application program code stored in the memory 403. This is not limited in this embodiment of this application.

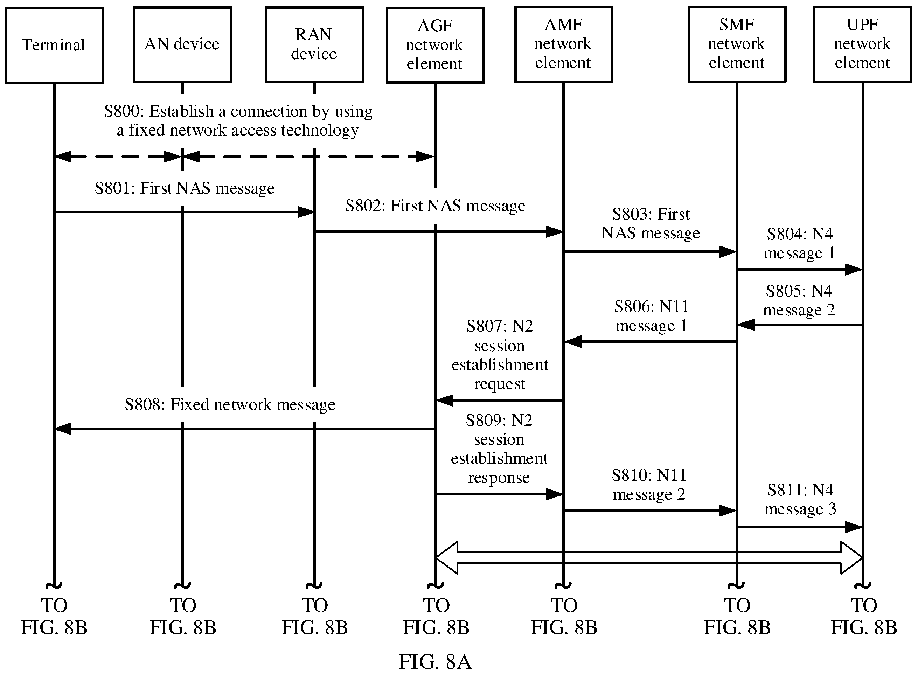

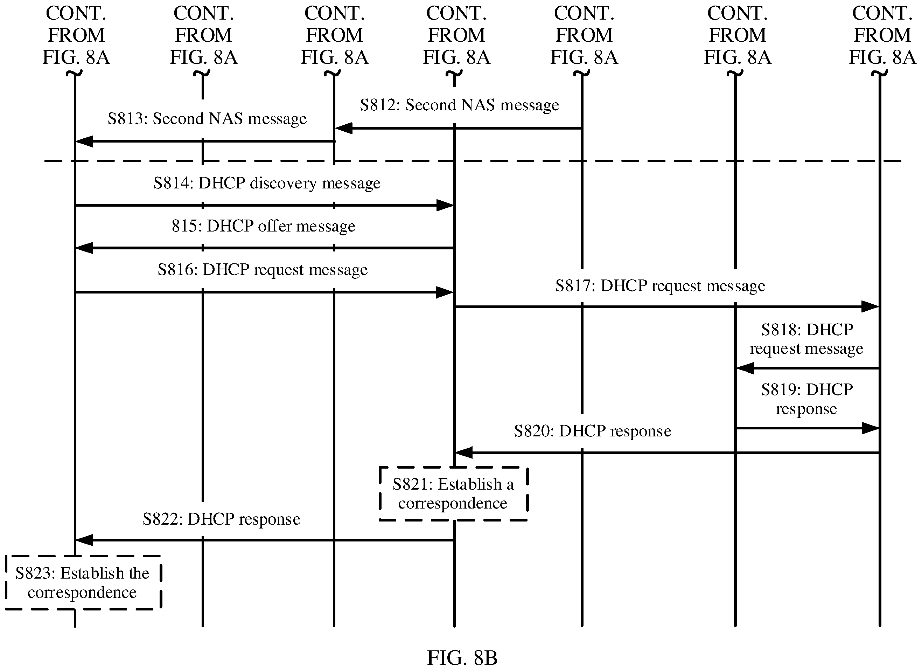

Optionally, for example, the session establishment system shown in FIG. 1 or FIG. 2 is applied to the 5G network shown in FIG. 3. FIG. 8A and FIG. 8B show yet another session establishment method according to an embodiment of this application. The session establishment method includes the following steps.

S800 to S813: Similar to steps S600 to S607, step S609, and steps S611 to S615. An only difference lies in that, in this embodiment of this application, one session corresponds to one resource, a terminal does not need to obtain a resource identifier, and neither of an AGF network element and the terminal needs to establish a correspondence between a session identifier and the resource identifier. For related descriptions, refer to the embodiment shown in FIG. 6A and FIG. 6B. Details are not described herein.

Optionally, if a session between the terminal and the AGF network element has not been established, the terminal may further initiate a session establishment procedure between the terminal and the AGF network element based on an identifier of the AGF network element. For example, the session establishment method provided in this embodiment of this application further includes the following steps.

S814 to S823: Same as steps S714 to S723. For details, refer to the embodiment shown in FIG. 7A and FIG. 7B. Details are not described herein.

According to the session establishment method provided in this embodiment of this application, more diversified services can be provided for the terminal. For a related analysis, refer to the embodiment shown in FIG. 5A and FIG. 5B. Details are not described herein.

Actions of the terminal or an SMF network element in steps S801 to S823 may be performed by the processor 401 in the communications device 400 shown in FIG. 4 by invoking the application program code stored in the memory 403. This is not limited in this embodiment of this application.

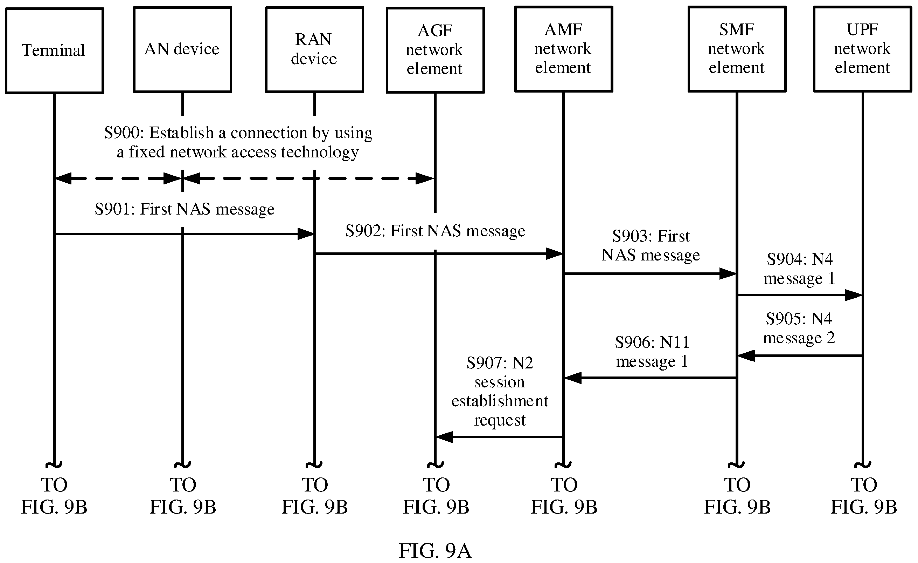

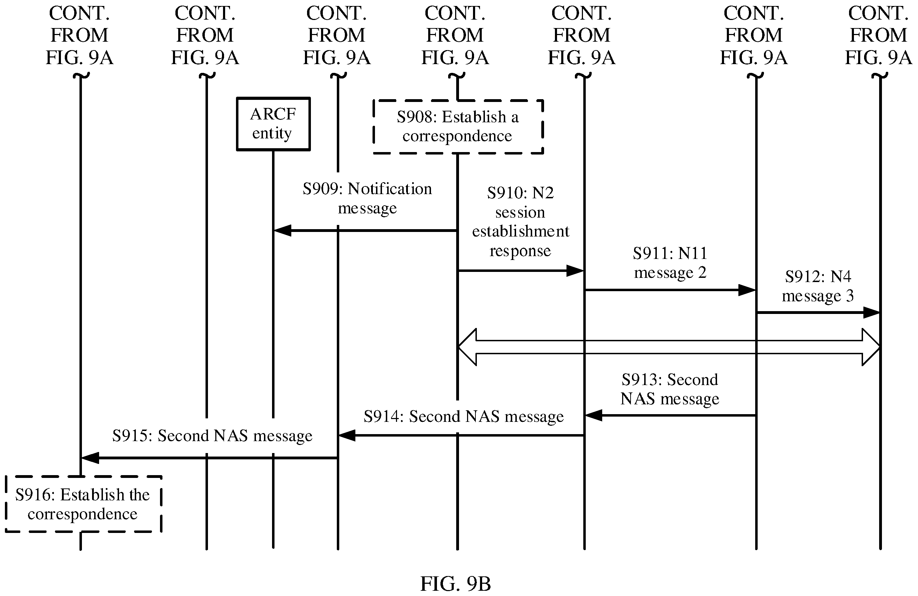

Optionally, for example, the session establishment system shown in FIG. 1 or FIG. 2 is applied to the 5G network shown in FIG. 3. FIG. 9A and FIG. 9B show still yet another session establishment method according to an embodiment of this application. The session establishment method includes the following steps.

S900 to S908: Same as steps S500 to S508. For details, refer to the embodiment shown in FIG. 5A and FIG. 5B. Details are not described herein.

S909: An AGF network element sends a resource identifier to an access resource control function (access resource control function, ARCF) network element, and the ARCF network element receives the resource identifier from the AGF network element. The resource identifier is used to configure a resource for an AN device.

S910 to S916: Same as steps S509 to S515. For details, refer to the embodiment shown in FIG. 5A and FIG. 5B. Details are not described herein.

According to the session establishment method provided in this embodiment of this application, more diversified services can be provided for the terminal. For a related analysis, refer to the embodiment shown in FIG. 5A and FIG. 5B. Details are not described herein.

Actions of a terminal or an SMF network element in steps S901 to S916 may be performed by the processor 401 in the communications device 400 shown in FIG. 4 by invoking the application program code stored in the memory 403. This is not limited in this embodiment of this application.

Optionally, in the embodiments shown in FIG. 6A and FIG. 6B to FIG. 8A and FIG. 8B, when the AGF network element obtains the resource identifier, step S909 may also be performed, and the ARCF network element configures the resource for the AN device based on the resource identifier. Details are not described herein.

The foregoing mainly describes the solutions provided in the embodiments of this application from a perspective of interaction between the network elements. It may be understood that, to implement the foregoing functions, the terminal or the session management network element includes corresponding hardware structures and/or software modules for performing the functions. A person skilled in the art should be easily aware that, in combination with the examples described in the embodiments disclosed in this specification, units and algorithms steps can be implemented by hardware or a combination of hardware and computer software in this application. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

In the embodiments of this application, the terminal or the session management network element may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in the embodiments of this application, division into the modules is an example, and is merely logical function division. In actual implementation, another division manner may be used.

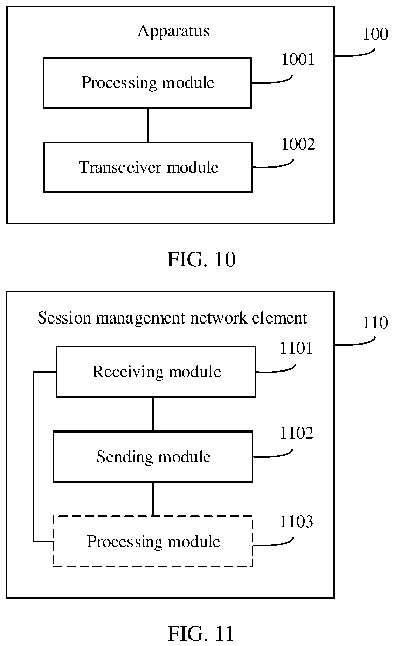

For example, when functional modules are obtained through division in an integrated manner, FIG. 10 is a schematic structural diagram of an apparatus 100. The apparatus 100 may be the terminal in the foregoing embodiments, or may be a chip or circuit in the terminal in the foregoing embodiments. This is not specifically limited in this embodiment of this application. The apparatus 100 includes a processing module 1001 and a transceiver module 1002. The processing module 1001 is configured to: in a process in which the terminal establishes a connection to a second access network device, obtain an identifier of the second access network device. The transceiver module 1002 is configured to send a first NAS message to a first access network device, where the first NAS message carries the identifier of the second access network device, and the identifier of the second access network device is used by the terminal to establish a session by using the second access network device.

Optionally, the transceiver module 1002 is further configured to receive a second NAS message from the first access network device, where the second NAS message carries a resource identifier corresponding to the session, and the resource identifier is used by the second access network device to identify the session.

Optionally, the transceiver module 1002 is further configured to receive a second NAS message from the first access network device. The processing module 1001 is further configured to initiate a session establishment procedure between the terminal and the second access network device based on the identifier of the second access network device.

Optionally, the transceiver module 1002 is further configured to receive a resource identifier corresponding to the session from the second access network device, where the resource identifier is used by the second access network device to identify the session. The transceiver module 1002 is further configured to receive a second NAS message from the first access network device.

Optionally, the processing module 1001 is further configured to obtain a terminal identifier, where the terminal identifier is used by the second access network device to identify the terminal.

All related content of the steps in the foregoing method embodiments may be cited in function descriptions of corresponding functional modules. Details are not described herein.

In this embodiment, the apparatus 100 is presented in a form of functional modules obtained through division in an integrated manner. The "module" herein may be an application-specific integrated circuit ASIC, a processor and a memory that execute one or more software or firmware programs, an integrated logic circuit, and/or another device that can provide the foregoing functions.

In a simple embodiment, a person skilled in the art may figure out that the apparatus 100 may be in the form shown in FIG. 4.

For example, the processor 401 in FIG. 4 may invoke the computer-executable instruction stored in the memory 403, to enable the apparatus 100 to perform the session establishment method in the foregoing method embodiments.

Specifically, functions/implementation processes of the transceiver module 1002 and the processing module 1001 in FIG. 10 may be implemented by the processor 401 in FIG. 4 by invoking the computer-executable instruction stored in the memory 403. Alternatively, a function/an implementation process of the processing module 1001 in FIG. 10 may be implemented by the processor 401 in FIG. 4 by invoking the computer-executable instruction stored in the memory 403, and a function/an implementation process of the transceiver module 1002 in FIG. 10 may be implemented by the communications interface 404 in FIG. 4.

Optionally, when the apparatus 100 is the chip or circuit, the function/implementation process of the transceiver module 1002 may alternatively be implemented by using a pin, a circuit, or the like. Optionally, when the apparatus 100 is the chip or circuit, the memory 403 may be a storage unit in the chip or circuit, for example, a register or a cache. Certainly, when the apparatus 100 is the terminal, the memory 403 may be a storage unit that is located outside a chip and that is in the terminal. This is not specifically limited in the embodiments of this application.

The apparatus provided in this embodiment of this application may be configured to perform the foregoing session establishment method. Therefore, for a technical effect that can be achieved by the apparatus, refer to the foregoing method embodiments. Details are not described herein.

For example, when functional modules are obtained through division in an integrated manner, FIG. 11 is a schematic structural diagram of a session management network element 110. The session management network element 110 includes a receiving module 1101 and a sending module 1102. The receiving module 1101 is configured to receive a first NAS message from a first access network device, where the first NAS message carries an identifier of a second access network device. The sending module 1102 is configured to send a first message to a mobility management network element, where the first message is used to indicate a session to be established by using the second access network device corresponding to the identifier of the second access network device.

Optionally, the sending module 1102 is further configured to send a second NAS message to the first access network device, where the second NAS message carries at least one of a resource identifier corresponding to the session or a terminal identifier, the terminal identifier is used by the second access device to identify a terminal, and the resource identifier is used by the second access device to identify the session.

Optionally, as shown in FIG. 11, the session management network element further includes a processing module 1103. The processing module 1103 is configured to select the second access network device for the session based on the identifier of the second access network device.

Optionally, the processing module 1103 is further configured to obtain at least one of location information of the terminal, subscription data of the terminal, first indication information, or a local policy, where the first indication information is used by the terminal to request selection of another access network device for the session. The processing module 1103 is further configured to allow, based on the at least one of the location information of the terminal, the subscription data of the terminal, the first indication information, or the local policy, the selection of the another access network device for the session.

All related content of the steps in the foregoing method embodiments may be cited in function descriptions of corresponding functional modules. Details are not described herein.

In this embodiment of this application, the session management network element 110 is presented in a form of functional modules obtained through division in an integrated manner. The "module" herein may be an application-specific integrated circuit ASIC, a processor and a memory that execute one or more software or firmware programs, an integrated logic circuit, and/or another device that can provide the foregoing functions. In a simple embodiment, a person skilled in the art may figure out that the session management network element 110 may be in the form shown in FIG. 4.

For example, the processor 401 in FIG. 4 may invoke the computer-executable instruction stored in the memory 403, to enable the session management network element 110 to perform the session establishment method in the foregoing method embodiments.

Specifically, functions/implementation processes of the receiving module 1101, the sending module 1102, and the processing module 1103 in FIG. 11 may be implemented by the processor 401 in FIG. 4 by invoking the computer-executable instruction stored in the memory 403. Alternatively, a function/an implementation process of the processing module 1103 in FIG. 11 may be implemented by the processor 401 in FIG. 4 by invoking the computer-executable instruction stored in the memory 403, and functions/implementation processes of the receiving module 1101 and the sending module 1102 in FIG. 11 may be implemented by the communications interface 404 in FIG. 4.

The session management network element provided in this embodiment of this application may perform the foregoing session establishment method. Therefore, for a technical effect that can be achieved by the session management network element, refer to the foregoing method embodiments. Details are not described herein.

Optionally, an embodiment of this application provides a chip system. The chip system includes a processor, configured to support the session management network element in implementing the foregoing session establishment method, for example, selecting the second access network device for the session based on the identifier of the second access network device. In a possible design, the chip system further includes a memory. The memory is configured to store a program instruction and data that are necessary for the session management network element. Certainly, alternatively, the memory may not be in the chip system. The chip system may include a chip, or may include a chip and another discrete device. This is not specifically limited in this embodiment of this application.

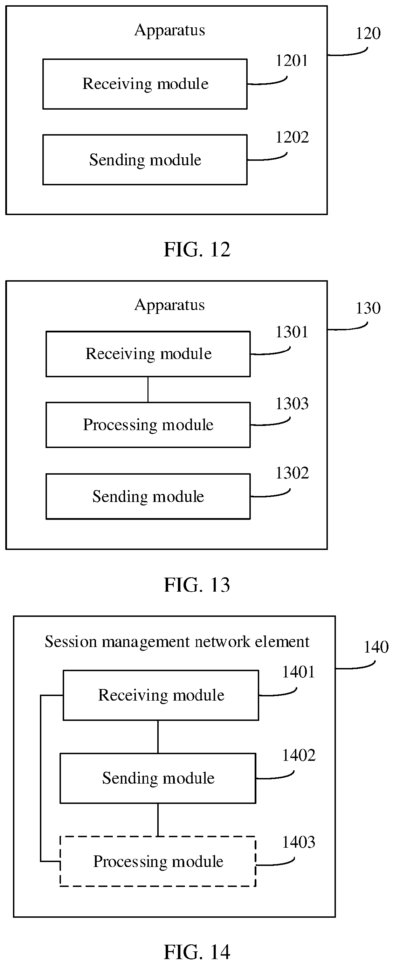

For example, when functional modules are obtained through division in an integrated manner, FIG. 12 is a schematic structural diagram of an apparatus 120. The apparatus 120 may be the terminal in the foregoing embodiments, or may be a chip or circuit in the terminal in the foregoing embodiments. This is not specifically limited in this embodiment of this application. The apparatus 120 includes a receiving module 1201 and a sending module 1202. The sending module 1202 is configured to send a first NAS message to a first access network device, where the first NAS message is used to request to establish a session. The receiving module 1201 is configured to receive an identifier of a second access network device, where the identifier of the second access network device is used to indicate that the terminal has established the session by using the second access network device.

Optionally, the receiving module 1201 is specifically configured to: receive the identifier of the second access network device from the second access network device; or receive a second NAS message from the first access network device, where the second NAS message carries the identifier of the second access network device.

All related content of the steps in the foregoing method embodiments may be cited in function descriptions of corresponding functional modules. Details are not described herein.

In this embodiment, the apparatus 120 is presented in a form of functional modules obtained through division in an integrated manner. The "module" herein may be an application-specific integrated circuit ASIC, a processor and a memory that execute one or more software or firmware programs, an integrated logic circuit, and/or another device that can provide the foregoing functions.

In a simple embodiment, a person skilled in the art may figure out that the apparatus 120 may be in the form shown in FIG. 4.

For example, the processor 401 in FIG. 4 may invoke the computer-executable instruction stored in the memory 403, to enable the apparatus 120 to perform the session establishment method in the foregoing method embodiments.

Specifically, functions/implementation processes of the receiving module 1201 and the sending module 1202 in FIG. 12 may be implemented by the processor 401 in FIG. 4 by invoking the computer-executable instruction stored in the memory 403. Alternatively, functions/implementation processes of the receiving module 1201 and the sending module 1202 in FIG. 12 may be implemented by the communications interface 404 in FIG. 4.

Optionally, when the apparatus 120 is the chip or circuit, the functions/implementation processes of the receiving module 1201 and the sending module 1202 may alternatively be implemented by using a pin, a circuit, or the like. Optionally, when the apparatus 120 is the chip or circuit, the memory 403 may be a storage unit in the chip or circuit, for example, a register or a cache. Certainly, when the apparatus 120 is the terminal, the memory 403 may be a storage unit that is located outside a chip and that is in the terminal. This is not specifically limited in the embodiments of this application.

The apparatus provided in this embodiment of this application may be configured to perform the foregoing session establishment method. Therefore, for a technical effect that can be achieved by the apparatus, refer to the foregoing method embodiments. Details are not described herein.

Alternatively, for example, when functional modules are obtained through division in an integrated manner, FIG. 13 is a schematic structural diagram of an apparatus 130. The apparatus 130 may be the terminal in the foregoing embodiments, or may be a chip or circuit in the terminal in the foregoing embodiments. This is not specifically limited in this embodiment of this application. The apparatus 130 includes a receiving module 1301, a sending module 1302, and a processing module 1303. The sending module 1302 is configured to send a first NAS message to a first access network device, where the first NAS message is used to request to establish a session. The receiving module 1301 is configured to receive an identifier of a second access network device. The processing module 1303 is configured to initiate a session establishment procedure between the terminal and the second access network device based on the identifier of the second access network device.

Optionally, the receiving module 1301 is specifically configured to: receive the identifier of the second access network device from the second access network device; or receive a second NAS message from the first access network device, where the second NAS message carries the identifier of the second access network device.

All related content of the steps in the foregoing method embodiments may be cited in function descriptions of corresponding functional modules. Details are not described herein.

In this embodiment, the apparatus 130 is presented in a form of functional modules obtained through division in an integrated manner. The "module" herein may be an application-specific integrated circuit ASIC, a processor and a memory that execute one or more software or firmware programs, an integrated logic circuit, and/or another device that can provide the foregoing functions.

In a simple embodiment, a person skilled in the art may figure out that the apparatus 130 may be in the form shown in FIG. 4.

For example, the processor 401 in FIG. 4 may invoke the computer-executable instruction stored in the memory 403, to enable the apparatus 130 to perform the session establishment method in the foregoing method embodiments.

Specifically, functions/implementation processes of the receiving module 1301, the sending module 1302, and the processing module 1303 in FIG. 13 may be implemented by the processor 401 in FIG. 4 by invoking the computer-executable instruction stored in the memory 403. Alternatively, a function/an implementation process of the processing module 1303 in FIG. 13 may be implemented by the processor 401 in FIG. 4 by invoking the computer-executable instruction stored in the memory 403, and functions/implementation processes of the receiving module 1301 and the sending module 1302 in FIG. 13 may be implemented by the communications interface 404 in FIG. 4.

Optionally, when the apparatus 130 is the chip or circuit, the functions/implementation processes of the receiving module 1301 and the sending module 1302 may alternatively be implemented by using a pin, a circuit, or the like. Optionally, when the apparatus 130 is the chip or circuit, the memory 403 may be a storage unit in the chip, for example, a register or a cache. Certainly, when the apparatus 130 is the terminal, the memory 403 may be a storage unit that is located outside a chip and that is in the terminal. This is not specifically limited in the embodiments of this application.

The apparatus provided in this embodiment of this application may be configured to perform the foregoing session establishment method. Therefore, for a technical effect that can be achieved by the apparatus, refer to the foregoing method embodiments. Details are not described herein.

For example, when functional modules are obtained through division in an integrated manner, FIG. 14 is a schematic structural diagram of a session management network element 140. The session management network element 140 includes a receiving module 1401 and a sending module 1402. The receiving module 1401 is configured to receive a first NAS message from a first access network device, where the first NAS message is used to request to establish a session. The sending module 1402 is configured to send a first message to a mobility management network element, where the first message is used to indicate the session to be established by using a second access network device.

Optionally, the sending module 1402 is further configured to send a second NAS message to the first access network device, where the second NAS message carries an identifier of the second access network device.

Optionally, as shown in FIG. 14, the session management network element further includes a processing module 1403. The processing module 1403 is configured to select the second access network device for the session based on location information of a terminal, where the request message further carries the identifier of the second access network device correspondingly.

Optionally, the processing module 1403 is further configured to obtain at least one of the location information of the terminal, subscription data of the terminal, first indication information, or a local policy, where the first indication information is used by the terminal to request selection of another access network device for the session. The processing module 1403 is further configured to allow, based on the at least one of the location information of the terminal, the subscription data of the terminal, the first indication information, or the local policy, the selection of the another access network device for the session.

All related content of the steps in the foregoing method embodiments may be cited in function descriptions of corresponding functional modules. Details are not described herein.

In this embodiment of this application, the session management network element 140 is presented in a form of functional modules obtained through division in an integrated manner. The "module" herein may be an application-specific integrated circuit ASIC, a processor and a memory that execute one or more software or firmware programs, an integrated logic circuit, and/or another device that can provide the foregoing functions. In a simple embodiment, a person skilled in the art may figure out that the session management network element 140 may be in the form shown in FIG. 4.

For example, the processor 401 in FIG. 4 may invoke the computer-executable instruction stored in the memory 403, to enable the session management network element 140 to perform the session establishment method in the foregoing method embodiments.

Specifically, functions/implementation processes of the receiving module 1401, the sending module 1402, and the processing module 1403 in FIG. 14 may be implemented by the processor 401 in FIG. 4 by invoking the computer-executable instruction stored in the memory 403. Alternatively, a function/an implementation process of the processing module 1403 in FIG. 14 may be implemented by the processor 401 in FIG. 4 by invoking the computer-executable instruction stored in the memory 403, and functions/implementation processes of the receiving module 1401 and the sending module 1402 in FIG. 14 may be implemented by the communications interface 404 in FIG. 4.

The session management network element provided in this embodiment of this application may perform the foregoing session establishment method. Therefore, for a technical effect that can be achieved by the session management network element, refer to the foregoing method embodiments. Details are not described herein.

Optionally, an embodiment of this application provides a chip system. The chip system includes a processor, configured to support the session management network element in implementing the foregoing session establishment method, for example, selecting the second access network device for the session based on the identifier of the second access network device. In a possible design, the chip system further includes a memory. The memory is configured to store a program instruction and data that are necessary for the session management network element. Certainly, alternatively, the memory may not be in the chip system. The chip system may include a chip, or may include a chip and another discrete device. This is not specifically limited in this embodiment of this application.

In the foregoing embodiments, the apparatus 100, the apparatus 120, the apparatus 130, the session management network element 110, and the session management network element 140 each are presented in a form of functional modules obtained through division in an integrated manner. Certainly, each functional module of the apparatus and the session management network element may be obtained through division based on each function in the embodiments of this application. This is not specifically limited in the embodiments of this application.

All or some of the foregoing embodiments may be implemented by software, hardware, firmware, or any combination thereof. When a software program is used to implement the embodiments, the embodiments may be all or partially implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the accompanying claims, and are intended to cover any or all of modifications, variations, combinations, or equivalents within the scope of this application. It is clear that, the person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A session establishment method, wherein the method comprises:
in a process in which a terminal establishes a connection to a second access network device, obtaining, by the terminal, an identifier of the second access network device; and
sending, by the terminal, a first non-access stratum NAS message to a first access network device, wherein the first NAS message carries the identifier of the second access network device, and the identifier of the second access network device is used by the terminal to establish a session by using the second access network device.

2. The method according to claim 1, wherein after the sending, by the terminal, a first NAS message to a first access network device, the method further comprises:
receiving, by the terminal, a second NAS message from the first access network device, wherein the second NAS message carries a resource identifier corresponding to the session, and the resource identifier is used by the second access network device to identify the session.

3. The method according to claim 1, wherein after the sending, by the terminal, a first NAS message to a first access network device, the method further comprises:
receiving, by the terminal, a second NAS message from the first access network device; and
initiating, by the terminal, a session establishment procedure between the terminal and the second access network device based on the identifier of the second access network device.

4. The method according to claim 1, wherein after the sending, by the terminal, a first NAS message to a first access network device, the method further comprises:
receiving, by the terminal, a resource identifier corresponding to the session from the second access network device, wherein the resource identifier is used by the second access network device to identify the session; and
receiving, by the terminal, a second NAS message from the first access network device.

5. The method according to any one of claims 2 to 4, wherein the second NAS message further carries second indication information, and the second indication information is used to indicate the session to be established by using the second access network device.

6. The method according to any one of claims 1 to 5, wherein the method further comprises:
obtaining, by the terminal, a terminal identifier, wherein the terminal identifier is used by the second access network device to identify the terminal.

7. The method according to any one of claims 1 to 6, wherein the first NAS message further carries first indication information, and the first indication information is used by the terminal to request selection of another access network device for the session.

8. A session establishment method, wherein the method comprises:
receiving, by a session management network element, a first non-access stratum NAS message from a first access network device, wherein the first NAS message carries an identifier of a second access network device; and
sending, by the session management network element, a first message to a mobility management network element, wherein the first message is used to indicate a session to be established by using the second access network device corresponding to the identifier of the second access network device.

9. The method according to claim 8, wherein after the sending, by the session management network element, a first message to a mobility management network element, the method further comprises:
sending, by the session management network element, a second NAS message to the first access network device, wherein the second NAS message carries at least one of a resource identifier corresponding to the session or a terminal identifier, the terminal identifier is used by the second access device to identify a terminal, and the resource identifier is used by the second access device to identify the session.

10. The method according to claim 8 or 9, wherein the method further comprises:
selecting, by the session management network element, the second access network device for the session based on the identifier of the second access network device.

11. The method according to claim 10, wherein the method further comprises:
obtaining, by the session management network element, at least one of location information of the terminal, subscription data of the terminal, first indication information, or a local policy, wherein the first indication information is used by the terminal to request selection of another access network device for the session; and
allowing, by the session management network element based on the at least one of the location information of the terminal, the subscription data of the terminal, the first indication information, or the local policy, the selection of the another access network device for the session.

12. A session establishment method, wherein the method comprises:
receiving, by a mobility management network element, a first non-access stratum NAS message from a first access network device, wherein the first NAS message carries an identifier of a second access network device;
sending, by the mobility management network element, a second message to the second access network device corresponding to the identifier of the second access network device; and
receiving, by the second access network device, the second message from the mobility management network element, and establishing a session based on the second message.

13. A session establishment method, wherein the method comprises:
sending, by a terminal, a first non-access stratum NAS message to a first access network device, wherein the first NAS message is used to request to establish a session; and
receiving, by the terminal, an identifier of a second access network device, wherein the identifier of the second access network device is used to indicate that the terminal has established the session by using the second access network device; or
receiving, by the terminal, an identifier of the second access network device, and initiating a session establishment procedure between the terminal and the second access network device based on the identifier of the second access network device.

14. The method according to claim 13, wherein the receiving, by the terminal, an identifier of a second access network device comprises:
receiving, by the terminal, the identifier of the second access network device from the second access network device; or
receiving, by the terminal, a second NAS message from the first access network device, wherein the second NAS message carries the identifier of the second access network device.

15. A session establishment method, wherein the method comprises:
receiving, by a session management network element, a first non-access stratum NAS message from a first access network device, wherein the first NAS message is used to request to establish a session; and
sending, by the session management network element, a first message to a mobility management network element, wherein the first message is used to indicate the session to be established by using a second access network device.

16. The method according to claim 15, wherein after the sending, by the session management network element, a first message to a mobility management network element, the method further comprises:
sending, by the session management network element, a second NAS message to the first access network device, wherein the second NAS message carries an identifier of the second access network device.

17. The method according to claim 15 or 16, wherein before the sending, by the session management network element, a request message to a mobility management network element, the method further comprises:
selecting, by the session management network element, the second access network device for the session based on location information of a terminal, wherein
the request message further carries the identifier of the second access network device correspondingly.

18. A session establishment method, wherein the method comprises:
receiving, by a mobility management network element, a first non-access stratum NAS message from a first access network device, wherein the first NAS message is used to request to establish a session;
sending, by the mobility management network element, a second message to a second access network device; and
receiving, by the second access network device, the second message from the mobility management network element, and establishing the session based on the second message.

19. A terminal, wherein the terminal comprises a processing module and a transceiver module, wherein
the processing module is configured to: in a process in which the terminal establishes a connection to a second access network device, obtain an identifier of the second access network device; and
the transceiver module is configured to send a first non-access stratum NAS message to a first access network device, wherein the first NAS message carries the identifier of the second access network device, and the identifier of the second access network device is used by the terminal to establish a session by using the second access network device.

20. The terminal according to claim 19, wherein
the transceiver module is further configured to receive a second NAS message from the first access network device, wherein the second NAS message carries a resource identifier corresponding to the session, and the resource identifier is used by the second access network device to identify the session.

21. The terminal according to claim 19, wherein
the transceiver module is further configured to receive a second NAS message from the first access network device; and
the processing module is further configured to initiate a session establishment procedure between the terminal and the second access network device based on the identifier of the second access network device.

22. The terminal according to claim 19, wherein
the transceiver module is further configured to receive a resource identifier corresponding to the session from the second access network device, wherein the resource identifier is used by the second access network device to identify the session; and
the transceiver module is further configured to receive a second NAS message from the first access network device.

23. The terminal according to any one of claims 19 to 22, wherein
the processing module is further configured to obtain a terminal identifier, wherein the terminal identifier is used by the second access network device to identify the terminal.

24. A session management network element, wherein the session management network element comprises a receiving module and a sending module, wherein
the receiving module is configured to receive a first non-access stratum NAS message from a first access network device, wherein the first NAS message carries an identifier of a second access network device; and
the sending module is configured to send a first message to a mobility management network element, wherein the first message is used to indicate a session to be established by using the second access network device corresponding to the identifier of the second access network device.

25. The session management network element according to claim 24, wherein
the sending module is further configured to send a second NAS message to the first access network device, wherein the second NAS message carries at least one of a resource identifier corresponding to the session or a terminal identifier, the terminal identifier is used by the second access device to identify a terminal, and the resource identifier is used by the second access device to identify the session.

26. The session management network element according to claim 24 or 25, wherein the session management network element further comprises a processing module, wherein
the processing module is configured to select the second access network device for the session based on the identifier of the second access network device.

27. The session management network element according to claim 26, wherein
the processing module is further configured to obtain at least one of location information of the terminal, subscription data of the terminal, first indication information, or a local policy, wherein the first indication information is used by the terminal to request selection of another access network device for the session; and
the processing module is further configured to allow, based on the at least one of the location information of the terminal, the subscription data of the terminal, the first indication information, or the local policy, the selection of the another access network device for the session.

28. A terminal, wherein the terminal comprises a receiving module and a sending module, wherein
the sending module is configured to send a first non-access stratum NAS message to a first access network device, wherein the first NAS message is used to request to establish a session; and
the receiving module is configured to receive an identifier of a second access network device, wherein the identifier of the second access network device is used to indicate that the terminal has established the session by using the second access network device; or
the terminal comprises a receiving module, a sending module, and a processing module, wherein
the sending module is configured to send a first non-access stratum NAS message to a first access network device, wherein the first NAS message is used to request to establish a session;
the receiving module is configured to receive an identifier of a second access network device; and
the processing module is configured to initiate a session establishment procedure between the terminal and the second access network device based on the identifier of the second access network device.

29. The terminal according to claim 28, wherein the receiving module is specifically configured to:
receive the identifier of the second access network device from the second access network device; or
receive a second NAS message from the first access network device, wherein the second NAS message carries the identifier of the second access network device.

30. A session management network element, wherein the session management network element comprises a receiving module and a sending module, wherein
the receiving module is configured to receive a first non-access stratum NAS message from a first access network device, wherein the first NAS message is used to request to establish a session; and
the sending module is configured to send a first message to a mobility management network element, wherein the first message is used to indicate the session to be established by using a second access network device.

31. The session management network element according to claim 30, wherein
the sending module is further configured to send a second NAS message to the first access network device, wherein the second NAS message carries an identifier of the second access network device.

32. The session management network element according to claim 30 or 31, wherein the session management network element further comprises a processing module, wherein
the processing module is configured to select the second access network device for the session based on location information of a terminal, wherein
the request message further carries the identifier of the second access network device correspondingly.

33. A session establishment system, wherein the session establishment system comprises a mobility management network element and a second access network device, wherein
the mobility management network element is configured to receive a first non-access stratum NAS message from a first access network device, wherein the first NAS message carries an identifier of the second access network device;
the mobility management network element is further configured to send a second message to the second access network device corresponding to the identifier of the second access network device; and
the second access network device is configured to: receive the second message from the mobility management network element, and establish a session based on the second message.

34. The session establishment system according to claim 33, wherein
the mobility management network element is further configured to select the second access network device for the session based on the identifier of the second access network device.

35. The session establishment system according to claim 34, wherein
the mobility management network element is further configured to obtain at least one of location information of a terminal, subscription data of the terminal, first indication information, or a local policy, wherein the first indication information is used by the terminal to request selection of another access network device for the session; and
the mobility management network element is further configured to allow, based on the at least one of the location information of the terminal, the subscription data of the terminal, the first indication information, or the local policy, the selection of the another access network device for the session.

36. The session establishment system according to claim 34 or 35, wherein
the mobility management network element is further configured to receive third indication information from a session management network element, wherein the third indication information is used to indicate that the selection of the another access network device for the session is allowed.

37. The session establishment system according to any one of claims 33 to 36, wherein
the mobility management network element is further configured to receive a second NAS message from the session management network element, wherein the second NAS message carries at least one of a resource identifier corresponding to the session or a terminal identifier, the terminal identifier is used by the second access device to identify the terminal, and the resource identifier is used by the second access device to identify the session; and
the mobility management network element is further configured to send the second NAS message to the first access network device.

38. The session establishment system according to claim 37, wherein
the second access network device is further configured to allocate the terminal identifier to the terminal; or the second access network device is further configured to receive the terminal identifier from the session management network element.

39. The session establishment system according to claim 37 or 38, wherein
the second access network device is further configured to allocate the resource identifier to the terminal; or the second access network device is further configured to receive the resource identifier from the session management network element.

40. A session establishment system, wherein the session establishment system comprises a mobility management network element and a second access network device, wherein
the mobility management network element is configured to receive a first non-access stratum NAS message from a first access network device, wherein the first NAS message is used to request to establish a session;
the mobility management network element is further configured to send a second message to the second access network device; and
the second access network device is further configured to: receive the second message from the mobility management network element, and establish the session based on the second message.

41. The session establishment system according to claim 40, wherein
the mobility management network element is further configured to select the second access network device for the session based on a relationship between a location of a terminal and a location of an access network device; or the mobility management network element is further configured to select the second access network device for the session based on location information of the terminal.

42. The session establishment system according to claim 40 or 41, wherein
the mobility management network element is further configured to receive a second NAS message from a session management network element, wherein the second NAS message carries an identifier of the second access network device; and
the mobility management network element is further configured to send the second NAS message to the first access network device.

43. A computer-readable storage medium, wherein the computer-readable storage medium stores an instruction, and when the instruction is run on a computer, the computer is enabled to perform the session establishment method according to any one of claims 1 to 11 or any one of claims 13 to 14.

44. A computer-readable storage medium, wherein the computer-readable storage medium stores an instruction, and when the instruction is run on a computer, the computer is enabled to perform the session establishment method according to any one of claims 15 to 17.

45. A computer program product, wherein the computer program product stores an instruction, and when the computer program product runs on a computer, the computer is enabled to perform the session establishment method according to any one of claims 1 to 11 or any one of claims 13 to 14.

46. A computer program product, wherein the computer program product stores an instruction, and when the computer program product runs on a computer, the computer is enabled to perform the session establishment method according to any one of claims 15 to 17.

47. A terminal, comprising a processor and a memory, wherein the memory is configured to store a computer-executable instruction, and when the terminal runs, the processor executes the computer-executable instruction stored in the memory, to enable the terminal to perform the session establishment method according to any one of claims 1 to 11 or any one of claims 13 to 14.

48. A session management network element, comprising a processor and a memory, wherein the memory is configured to store a computer-executable instruction, and when the session management network element runs, the processor executes the computer-executable instruction stored in the memory, to enable the session management network element to perform the session establishment method according to any one of claims 15 to 17.

49. An apparatus, configured to perform the session establishment method according to any one of claims 1 to 11 or any one of claims 13 to 14.
